# EUROPEAN PATENT SPECIFICATION

(11) **EP 3 221 105 B1**
(45) Date of publication and mention of the grant of the patent: **26.12.2018**
(21) Application number: 15826170.1
(22) Date of filing: 18.11.2015
(51) Int. Cl.: B28D 1/04, B28D 1/00, B23Q 1/48, B23Q 39/02, B28D 7/04

(54) **MACHINE FOR MACHINING SLAB MATERIALS**
MASCHINE ZUR BEARBEITUNG VON PLATTENMATERIALIEN
MACHINE POUR USINER DES MATÉRIAUX EN BRAMES

(30) Priority: 18.11.2014 IT MI20141993
(43) Date of publication of application: 27.09.2017
(73) Proprietor: GMM S.p.a., 28883 Gravellona Toce VB (IT)
(72) Inventor: GUAZZONI, Luigi, I-28883 Gravellona Toce (VB) (IT)
(74) Representative: Porta, Checcacci & Associati S.p.A
(86) International application number: PCT/IB2015/058925
(87) International publication number: WO 2016/079689

(56) References cited:
- WO-A1-2009/036785
- DE-A1- 2 700 386
- IT-B- 1 247 180

## Description

### Background of the invention

The present invention relates to a machine for machining slab materials, in particular, but not exclusively, stone materials, such as, for example, marbles and granites. The present invention relates to a machine as per the preamble of claim 1. Such a machine is known from DE 27 00 386.

The term "machining" is used herein to generically indicate any operation carried out on a piece of material, such as for example cutting, drilling, squaring or shaping.

### Prior Art

The machines for machining slab materials, and in particular stone materials, essentially comprise:
- a working plane configured to support a slab material to be machined,
- a tool-holder electrospindle to which a machining tool is associated, for example a cutting disc or a milling cutter, supported above said working plane by a respective supporting equipment movable perpendicularly to the working plane and configured to move the electrospindle about a rotation axis perpendicular to the working plane;
- a moving apparatus configured to move the electrospindle and the respective supporting equipment in parallel to the working plane; and
- an operation and control unit equipped with a suitable operator interface.

A plurality of supply lines, for example electrical supply lines and/or lines for transporting a cooling fluid at the machining tool, are connected to the electrospindle.

More specifically, the moving apparatus of the electrospindle and of the respective supporting equipment comprises a horizontal bridge that rests on walls or other vertical supporting structures and driving devices configured to move the electrospindle and the respective supporting equipment along the bridge and to move the bridge on the respective vertical supporting structures.

In this way, the electrospindle and the respective supporting equipment can be moved in parallel to the working plane along two directions perpendicular to each other. The supporting equipment of the electrospindle comprises in turn a first actuator device configured to move the electro spindle along an additional moving direction perpendicular to the working plane.

In order to carry out machining operations along moving directions parallel to the working plane and perpendicular to one another, as well as along oblique directions, it is also foreseen to rotate the electrospindle about a vertical axis, so as to have the piece of material being machined positioned according to different angles with respect to the machining tool.

To this end, the supporting equipment of the electrospindle comprises a second actuator device configured to rotate the electrospindle about such a vertical axis.

In recent times and for large-scale production of pieces of standard dimensions, such as for example tiles, skirtings or kitchen counters, there has been an increasing need of increasing the productivity of machines for machining slab materials in particular of those machines - commonly known as saw machines - specifically used for cutting slabs.

To this end, it has been proposed to carry out the cutting of a plurality slabs, stacked on each other as a pack and arranged on the working plane of the machine, by using cutting discs having a suitably increased diameter with respect to those commonly used for cutting a single slab.

The cutting of stacked slabs, however, has the drawback that as the diameter of the cutting disc increases, as would be desirable to increase the productivity of the machine, the cutting precision is also reduced. This, due to the fact that the cutting disc is constituted by a very thin metallic disc (generally 3-5 mm thick) which tends to bend along the cutting plane due to the stresses which the disc is subjected to during the cutting operations, with the result that the pieces obtained from the top slab of the pack practically never have exactly the same dimensions (as required) as those of the pieces obtained from the slabs below.

The compromise reached in practice thus consists of using cutting discs having a smaller diameter than the maximum desirable in combination with locking flanges to reduce the flexibility of the discs, all this however at the expense of the machine productivity which is not totally satisfactory for large-scale productions of standard pieces.

As an alternative to the cutting of a plurality of slabs stacked on each other as a pack, it has also been proposed in the prior art to use machines for cutting slabs provided with a plurality of cutting groups arranged in parallel to each other and each consisting of a cutting disc driven by a respective driving motor mounted vertically above the disc and connected thereto by means of a transmission provided with a 90° motion-transmitting gear.

A cutting machine of this type has for example been put on the market by the company Donatoni Macchine with the name of SX-3.

In this machine, the cutting groups are supported in parallel to each other by a vertical supporting plate perpendicularly extending to the working plane and kept at a predetermined and constant distance from the working plane by a respective supporting and moving apparatus, which will be discussed further hereinafter, to which the vertical supporting plate is hung.

In this known machine configuration, the vertical supporting plate is therefore not vertically movable, whereas the cutting groups supported by the plate are individually movably guided along such a plate both perpendicularly to the working plane, and horizontally towards and away from each other by means of respective actuator devices.

By means of this machine and thanks to the presence of a plurality of cutting groups arranged in parallel to each other it is possible to carry out simultaneous cuts by bringing the cutting discs of each group into engagement with the starting slab so as to simultaneously obtain a plurality of pieces of standard dimensions from a single slab arranged on the working plane.

In order to move the slab to be cut and the pieces obtained therefrom, moreover, these known cutting machines are provided with a suction-type manipulator group integrally mounted to the vertical supporting plate on the opposite side with respect to the cutting groups. In particular, such a manipulator group comprises a plurality of plates provided with suction-type means for picking up the pieces, each plate being moved along the vertical direction by a respective dedicated actuator device which has the function of bringing the suction-type means into a lower position with respect to each cutting disc so as to be able to pick up the machined piece or the piece to be machined.

As outlined above, finally, such cutting machines are provided with a supporting and moving apparatus of the vertical supporting plate of the cutting groups, said apparatus being arranged above such a plate and being configured to move, in parallel to the working plane along the aforementioned directions perpendicular to one another, the supporting plate and the elements supported by the same, in other words, the cutting groups on one side and the suction-type manipulator group on the other side.

Lastly, such a moving apparatus comprises an additional rotation group of the vertical supporting plate and of the elements supported by the same about a vertical axis perpendicular to the working plane, a horizontal bridge which rests on vertical supporting structures and actuator devices configured to move the moving group of the supporting plate along the bridge and the bridge along a runway perpendicularly supported to the bridge by the vertical supporting structures.

### Summary of the invention

The Applicant has found that the aforementioned machines provided with a plurality of cutting groups arranged in parallel to each other, even if they meet the need to increase the productivity of large-scale cutting operations of standard pieces, do have some drawbacks that are not easy to solve.

A first drawback is linked to the substantial complexity and to the cost of the machine, which requires:
- motors of suitable dimensions to rotate the vertical supporting plate and the elements supported by the same (the cutting discs, the respective driving motors, the manipulator group provided with plates with suction-type means and the respective dedicated actuator devices),
- motion transmission elements having a certain length and complexity to transmit the motion from the driving motors to the underlying cutting discs,
- suitable actuator devices to move each of the cutting discs with the respective driving motors along the vertical direction;
- suitable actuator devices to move the cutting discs with the respective driving motors along a horizontal direction towards/away from each other; and
- suitable dedicated actuator devices to vertically move the plates with the suction means of the manipulator group of the slabs.

A second drawback is linked to the fact that it is impossible to make horizontal cuts in the thickness of the slab with any of the cutting discs, where required: in such known machines, in fact, it is possible to carry out inclined cuts with respect to the vertical only up to a maximum of about 47° for example using the central cutting group in the case of three cutting groups. This is due to the vertical length of each cutting group and to the size of the lateral cutting groups which prevent greater inclinations for example of the central cutting group.

A third drawback is linked to possible difficulties in ensuring a precise angular positioning of the vertical supporting plate and of the elements supported by the same over a period of time due to the high masses involved and the relatively high forces of inertia which develop during the rotation about the vertical axis and which may cause, in the long term, a premature wearing of the motion transmission elements, for example of the gears of a geared motor, present in the moving group of the supporting plate about the vertical axis.

These premature wearing phenomena, moreover, can be further increased by the torsion stresses which the aforementioned motion transmission elements are subjected to in case of oblique cuts due to the torque that develops in case of use of at least one disc spaced with respect to a fulcrum represented by the vertical axis passing through the centre of the moving group of the supporting plate.

A fourth drawback is linked to noise phenomena that can develop over time due to the stacked arrangement of the cutting discs and of the respective driving motors, which arrangement requires a transmission provided with a 90° motion-transmitting gear that can be subjected to vibrations that can worsen over time due to wearing.

Lastly, a further drawback is linked to the relatively large distance between the horizontal bridge of the supporting and moving apparatus of the vertical supporting plate of the cutting groups and the cutting line, a distance which may jeopardise the cutting precision.

The technical problem underlying the present invention is therefore that of simplifying the machines for machining slab materials provided with a plurality of cutting groups arranged in parallel to one another, at least partially overcoming the drawbacks described above.

In particular, the technical problem is that of providing a machine for machining slab materials having a high productivity, comprising a plurality of cutting blades arranged in parallel to one another, for example for a large-scale production of pieces of standard dimensions, which, however, is at the same time very simple, low-cost and which allows to maintain the cutting precision over time.

The invention therefore relates, in a first aspect thereof, to a machine for machining slab materials according to claim 1.

In particular, the invention relates to a machine for machining block or slab materials comprising:
- a working plane configured to support a slab material to be machined;
- a first tool-holder electrospindle supported above said working plane by a respective supporting equipment, perpendicularly movable with respect to the working plane and configured to move said first electrospindle about a rotation axis perpendicular to the working plane;
- a moving apparatus configured to move the first electrospindle and the respective supporting equipment in parallel to the working plane and along directions perpendicular to one another;
- at least a second tool-holder electrospindle, rotationally and translationally integral with the first electrospindle, supported above said working plane in parallel to the first electrospindle by a respective supporting element associated to the supporting equipment of the first electrospindle;
- a first actuator device configured to move said at least a second electrospindle towards and away from said first electrospindle in parallel to said working plane and along a direction substantially perpendicular to a cutting plane extending perpendicularly to the working plane; and
- a second actuator device configured to move said at least a second electrospindle along a direction perpendicular to the working plane independently of the first electrospindle; said first and second actuator devices being supported by said supporting element of said at least a second electrospindle.

Advantageously, the machine according to the present invention allows to achieve the desired structural simplification and the desired cost reduction with respect to the known high-productivity machines for cutting slabs described above thanks to the use of electrospindles configured to directly drive respective cutting discs and thus capable to form cutting groups which are very compact, and by using only the supporting equipment of the first electrospindle and of the respective moving devices to simultaneously move all the electrospindles of the machine in parallel to the working plane, perpendicularly to the working plane and about a rotation axis perpendicular to the working plane.

In its operative cutting configuration of a single slab, therefore, the machine of the invention has a plurality of electrospindles in parallel to one another and having a horizontal axis, in other words parallel to the working plane, which rotate respective blades or cutting discs about said horizontal axis according to as many cutting planes perpendicular to the working plane.

In the following description and in the subsequent claims, the term "cutting plane" is used to indicate the laying plane of the cutting disc.

In the following description and in the subsequent claims and in accordance with conventional terminology in the art, the moving directions (or axes) parallel to the working plane will also be called directions or axes X and Y, the moving direction (or axis) perpendicular to the working plane will also be called direction or axis Z and the moving direction (or axis) about the axis Z will also called direction or axis W.

In the following description and in the subsequent claims, the terms "horizontal", "vertical", "oblique", "inclined", "upper", "lower", and so forth when referring to the machine or to parts thereof are intended to be referred to the working configuration of the machine.

In view of the above, it is thus clear that the machine of the invention not only achieves the desired structural simplification and the desired reduction of costs, but it is also controllable in an equally simple manner since it allows to use the same system of coordinates X, Y, Z and W of a conventional machine provided with a single electro spindle.

The mechanical configuration of the machine according to the invention, in fact, provides for a support of all the tool-holder electrospindles by means of only the supporting equipment of the first electrospindle - an element which is already present in a conventional machine provided with a single electrospindle - so as to achieve a multispindle cutting assembly that is very compact and formed by electrospindles rotationally integral with each other about the axis Z and translationally integral both above the working plane along the directions X and Y perpendicular to one another and also integrally movable towards and away from the working plane (direction Z).

In this way, it is thus advantageously possible to exploit moving elements already present in a conventional machine provided with a single electrospindle to carry out the necessary additional movements along the horizontal and the vertical directions of the additional electrospindle(s) by means of actuator devices that are very simple, of low weight and low cost.

In this way, it is also advantageously possible to drastically reduce the masses involved and therefore the forces of inertia with respect to those of machines of known type provided with a plurality of cutting groups in parallel to each other, so as to ensure a precise angular positioning of the cutting blades over time, limiting to the greatest possible extent premature wearing phenomena of the motion transmission elements, for example the gears of a gear motor, used to rotate the electrospindles about the rotation axis perpendicular to the working plane (axis W).

The machine according to the present invention can have at least one of the following preferred features; these can in particular be combined with one another as desired in order to satisfy specific application requirements.

Preferably, the machine comprises an operation and control unit equipped with a suitable operator interface.

Preferably, the moving apparatus configured to move the first electrospindle and the respective supporting equipment in parallel to the working plane comprises a horizontal bridge on which the supporting equipment of the first electrospindle is slidably mounted, said equipment being thus supported by the bridge perpendicularly thereto.

In this way, it is advantageously possible to reduce the distance between the horizontal bridge of the supporting and moving apparatus of the first electrospindle and of the additional electrospindles connected thereto, and the cutting line of the electrospindles, advantageously increasing the cutting precision with respect to the known high-productivity machines for cutting slabs described above.

Preferably, the first electrospindle and/or the additional electrospindles connected thereto are of the direct drive type, in other words, they rotate the machining tool associated thereto, such as for example a blade or cutting disc or a milling cutter, without interposition of reducers, gears or transmissions.

In this way, it is advantageously possible both to drastically reduce the noise in the transmission of motion to the cutting discs, which are directly driven by each electrospindle, and to have a very compact motor/tool group which is not subject to undesired vibration phenomena over time.

In a preferred embodiment, the first electrospindle and/or the additional electrospindles connected thereto comprise a liquid-cooled driving motor, so as to have an element for rotating the cutting discs which has a very small size.

In this way, it is advantageously possible to carry out simultaneous cuts while maintaining the cutting discs driven by the electrospindles at a short distance, of the order of 20 - 30 cm, from each other.

In a particularly preferred embodiment, the machine of the invention further comprises a third tool-holder electrospindle, also rotationally and translationally integral with the first and with the second electrospindle, supported above said working plane in parallel to the first electrospindle and at a side opposite to said second electrospindle by a respective supporting element associated to the supporting equipment of the first electrospindle.

In this way, it is advantageously possible both to further increase the productivity of the cutting machine and to have a symmetrical arrangement of masses with respect to the first electrospindle, with the related benefits in terms of balance of masses.

Within the framework of this preferred embodiment with three electrospindles, the machine of the invention preferably comprises:
- a third actuator device configured to move said third electrospindle towards and away from said first electrospindle in parallel to said working plane and along a direction substantially perpendicular to a cutting plane extending perpendicularly to the working plane; and
- a fourth actuator device configured to move said third electrospindle along a direction perpendicular to the working plane independently of the first and optionally of the second electrospindle;
the aforementioned third and fourth actuator devices being supported by said supporting element of said third electrospindle.

Also in this case, it is thus advantageously possible both to achieve a compact assembly of electrospindles rotationally and translationally integral with each other above the working plane and integrally movable towards and away from the latter by using moving devices already provided in a conventional cutting machine having a lower productivity provided with a single electrospindle, and to carry out the necessary additional movements along the horizontal direction (towards the first electrospindle centrally arranged in the configuration with three electrospindles) and vertical direction (towards the working plane) of the third electrospindle by means of actuator devices that can also be very simple, of low-weight and of low-cost.

In the various embodiments of the invention described above, therefore, the first electrospindle is moved along the vertical direction from and towards the working plane by the moving means provided to this end and active on the aforementioned single supporting equipment provided for this purpose, while the additional electrospindle or electrospindles are moved along the vertical direction from and towards the working plane by two distinct components of the machine: by the supporting equipment of the first electrospindle (integral movement of all of the electrospindles of the machine) and, when required, by the aforementioned second and fourth actuator device (independent movement of the second and/or of the third electro spindle from and towards the working plane).

In this way, it is advantageously possible to achieve the maximum operational flexibility of the machine, since it is possible to bring the desired number of cutting discs into engagement with the slab to be cut according to the machining requirements by using the supporting equipment of the first electrospindle and/or the aforementioned second and fourth actuator devices for moving the second and/or the third electrospindle (if present) from and towards the working plane.

In the various embodiments of the invention described above, moreover, the additional electrospindle or electrospindles can be advantageously moved along the horizontal direction in parallel to the working plane from and towards the first electrospindle by means of very simple, compact, low-weight and low-cost devices, since they have to move equally simple, compact, low-weight and low-cost elements formed by an electrospindle with the corresponding directly-driven cutting disc and by the respective actuator device for moving the latter from and towards the working plane.

In this way, it is advantageously possible to obtain the maximum operational flexibility of the machine in a simple and inexpensive manner, since it is possible to adjust the distance between the cutting discs using very simple, compact, low-weight and low-cost devices.

In a preferred embodiment, the supporting element of the second and/or of the third tool-holder electrospindle is configured to support the second and/or the third electrospindle at an offset position along a direction substantially parallel to said cutting plane extending perpendicularly to the working plane.

Still more preferably, the supporting element of the second and of the third tool-holder electrospindle is configured to support the second and the third electrospindle at positions forming a substantially triangle-shaped or "arrow-shaped" configuration of the electrospindles of the machine.

In this way, it is advantageously possible to reduce to the greatest possible extent the distance between the cutting discs driven by the electrospindles also when use is made of electrospindles comprising an air-cooled motor which is less expensive but more bulky (especially in length) with respect to the liquid-cooled motors mentioned before.

Preferably, the supporting element of the second and/or of the third electrospindle is fixed to the supporting equipment of the first tool-holder electrospindle.

Still more preferably, the supporting element of the second and/or of the third electrospindle is laterally extending in a cantilevered fashion from the supporting equipment of the first tool-holder electrospindle.

In this way, it is advantageously possible to support the electrospindles in parallel to each other and to connect in a mechanically simple manner the second and, if present, the third electrospindle to the first electrospindle so as to drive all of the electrospindles by means of only the supporting equipment of the first electrospindle.

Preferably, the supporting element of the second and/or of the third electrospindle is substantially plate-shaped.

Preferably, the plate is fixed to the supporting equipment of the first electrospindle so that its faces of larger size are parallel to the working plane so as to achieve a substantially "wing-shaped" configuration of the supporting element of the second and/or of the third electrospindle.

In this way, it is advantageously possible to support the electrospindles in a very simple manner, by means of a low-weight and low-cost element, for example by means of lightened plates of metallic material, so as to impart to the machine according to the invention advantageous characteristics of structural simplicity, reduced size and low forces of inertia.

Preferably, the first actuator device and/or the third actuator device configured to move the second and/or the third electrospindle towards and away from the first electrospindle comprises a linear actuator, preferably of the ball screw drive type.

In this way, it is advantageously possible to position the electrospindles with extreme precision and ensure that the cutting operation takes place at an equally precise manner according to parallel and spaced cutting planes according to the settings stored in the control software loaded into the operation and control unit of the machine.

Preferably, the second actuator device and/or the fourth actuator device configured to move the second and/or the third electrospindle along a direction perpendicular to the working plane are selected from a pneumatic actuator and an electromechanical actuator.

By using a pneumatic actuator, it is advantageously possible to carry out the additional movements of the second and/or of the third electro spindle (electrospindles located beside the first electrospindle) from and towards the working plane in a mechanically simple manner with the consequent cost reduction and simplicity of the machine.

By using an electromechanical actuator, for example of the ball screw drive type, on the other hand, it is advantageously possible to move the second and/or the third electrospindle very precisely from and towards the working plane whenever it is necessary to keep the cutting discs active on the slab at the maximum distance from each other, for example of about 124 cm, without using the first electrospindle and the cutting disc associated thereto.

In a particularly preferred embodiment, the first electrospindle is rotatably mounted on a supporting body associated to an end of the supporting equipment of the first electrospindle proximal to the working plane.

In this way, it is advantageously possible to impart to the first electrospindle additional rotational movements about a rotation axis perpendicular to the aforementioned axis Z, in other words parallel to the working plane in the cutting configuration of the machine.

In the following description and in the subsequent claims this direction of rotation will also be indicated with the term direction or axis R.

In this way, it is also advantageously possible to provide a machine for machining slab materials having a high productivity which is not only simple, low-cost and capable of maintaining the cutting precision over time with respect to the known machines described above, but it is also capable of carrying out additional machining operations on the slab material thereby increasing the production flexibility of the machine.

Thanks to the synergic cooperation between the supporting and moving structure of the electrospindles described above with the pivoting configuration of the first electrospindle, in fact, it is possible both to carry out horizontal cuts simultaneously and in parallel to each other in the thickness of the slab and to carry out drilling operations or additional machining operations of the slab edges, using suitable tools instead of the cutting disc of the first electrospindle, which operations - as outlined above - cannot be carried out by the machines provided with a plurality of cutting groups in parallel of the prior art.

This preferred configuration of the machine according to the invention allows to achieve a plurality of advantageous technical effects.

Firstly, the technical effect of allowing a wide variety of machining operations to be performed on the slab material using one or more electrospindles:
- vertical cuts using one or more electrospindles in parallel to the aforementioned directions X and Y;
- oblique cuts along the slab plane using one or more electrospindles and combining simultaneous movements in parallel to the aforementioned directions X and Y;
- inclined cuts with respect to the vertical and oblique cuts (along the plane of the slab) using the first electrospindle;
- horizontal cuts in the slab thickness using the first electrospindle;
- drilling and milling operations of the slab edge using the first electrospindle by positioning the same perpendicularly to the working plane.

Secondly, the technical effect of increasing the speed of execution of complex machining operations on the same slab since it may be possible to use a single machine upon rotation by 90° of the first electrospindle and of the cutting disc driven by the same with respect to the vertical cutting configuration or upon replacement of such a disc with another machining tool, again directly driven by the first electrospindle.

Preferably, the supporting body of the first electrospindle is provided with a substantially fork-shaped end in which the first electrospindle is rotatably mounted.

Within the framework of the present description and in the following claims, the expression "substantially fork-shaped" is used to indicate a supporting element configured to allow a rotation of the first electrospindle about the aforementioned direction R perpendicular to the vertical axis Z, in other words parallel to the working plane in the slab cutting configuration of the machine.

This supporting element may be provided with two shaped arms within which the first electrospindle is rotatably supported, or may be provided with a single suitably shaped arm, configured to rotatably support the first electrospindle.

Preferably, the rotation of the first electrospindle about the axis R perpendicular to the axis Z is driven by a motor mounted on the supporting equipment of the first electrospindle or, alternatively, mounted on the aforementioned supporting body of the first electrospindle.

Preferably, the supporting element of the second and/or of the third tool-holder electrospindle is fixed, preferably in a non-removable manner, to the supporting body of the first electrospindle, which body is in turn preferably provided with a substantially fork-shaped end.

Still more preferably, the supporting element of the second and/or of the third tool-holder electrospindle is laterally extending in a cantilevered fashion from the supporting body of the first electrospindle.

In this way, it is advantageously possible to support the second and/or the third electrospindle without interfering with the additional rotational movements of the first electrospindle about the aforementioned rotation axis R perpendicular to the axis Z.

Preferably, the supporting equipment of the first electrospindle and of the additional electrospindles comprises a braking device configured to prevent relative rotation movements between a part of the supporting equipment of the first electrospindle not rotatable about the axis Z and a part of such equipment rotatable about the axis Z and associated to the first electrospindle and, consequently, to the additional electrospindle(s) translationally and rotationally integral therewith.

Advantageously, such a braking device substantially completely absorbs the torsion stresses which are developed in the case of cuts, for example oblique cuts, carried out with the cutting disc driven by the second or by the third electrospindle and spaced with respect to a fulcrum represented by the vertical rotation axis Z of the first electrospindle. In this way, it is advantageously possible to drastically reduce, if not substantially eliminate, premature wearing phenomena of the gears of the moving device, for example and preferably a zero-clearance gear motor, used in the machine to rotate the first electrospindle and the additional electrospindle(s) translationally and rotationally integral therewith about the vertical axis Z contributing to ensuring the cutting precision of the machine over time.

Preferably, the aforementioned braking device comprises a fixed element associated to the fixed part of the supporting equipment and a movable element associated to the supporting body of the first electrospindle.

Preferably, the elements of the braking device are substantially ring-shaped and are coaxially arranged outside of the moving device, for example and preferably the aforementioned zero-clearance gear motor, used in the machine to rotate the first electrospindle and the additional electrospindle(s) translationally and rotationally integral therewith about the axis Z.

In additional preferred embodiments, the machine according to the invention may comprise a number of additional electrospindles rotationally and translationally integral with the first electrospindle greater than two as a function of specific application requirements aiming at increasing the productivity of the machine for large-scale productions.

Advantageously, the machine according to the invention may therefore preferably comprise from two to eight or more additional electrospindles rotationally and translationally integral with the first electrospindle, according to configurations having from three to nine or more electrospindles in total.

Preferably, the electrospindles additional to the first one are even in number so as to obtain a symmetrical configuration of masses with respect to the first electrospindle with the corresponding benefits in terms of balance of masses.

Preferably, all the electrospindles additional to the first one of the machine in its various configurations are supported by the supporting elements described above with reference to the preferred embodiment with three electrospindles in total (two additional electrospindles).

Preferably, all the electrospindles additional to the first one of the machine in its various configurations are moved towards and away from the first electrospindle and in a direction perpendicular to the working plane by means of respective actuator devices entirely similar to those described with reference to the preferred embodiment with three electrospindles in total (two additional electrospindles).

The preferred features illustrated above with reference to the preferred embodiment with three electrospindles in total (two additional electrospindles), are also applicable to machine configurations with four or more electrospindles in total.

In a particularly preferred embodiment, the machine of the invention further comprises a manipulator group of a slab material to be machined or machined rotationally and translationally integral with the first electrospindle.

In this way, it is advantageously possible to provide a high-productivity machine for machining slab materials which is not only simple, low-cost and capable of maintaining cutting precision over time with respect to the known machines described above, but which is also capable of moving the slab to be cut and/or the pieces obtained therefrom in a mechanically simple and inexpensive manner.

Thanks to the synergic cooperation between the supporting and moving structure of the electrospindles described above and the manipulator group of the slab material rotationally and translationally integral with the first electrospindle, in fact, it is possible to move the slab to be cut and/or the pieces obtained therefrom without recurring to complex manipulator groups provided with respective and autonomous dedicated actuator devices as foreseen by the known machine having a plurality of cutting discs described above.

In this preferred embodiment, in fact, the machine according to the invention advantageously allows to move the manipulator group of the slab material by means of the same moving devices of the first electrospindle so as to achieve a considerable structural simplification of the machine with respect to the known machine having a plurality of cutting discs described above.

Preferably, the manipulator group is positioned in parallel to a cutting plane extending perpendicularly to the working plane and frontally with respect to said first electrospindle.

In this way, in the preferred embodiment wherein the first electrospindle is rotatably mounted on the supporting body described above, the manipulator group rotates integrally with the first electrospindle about the direction R perpendicular to the axis Z.

This configuration allows to achieve a machine which is not only capable of carrying out additional machining operations on the slab material to the benefit of the production flexibility of the machine itself, but which is also capable of achieving a series of additional remarkable advantages.

Unlike the known machine having a plurality of cutting discs described above wherein the gripping means are activated with an additional vertical translation with respect to the vertical translation of the cutting groups, in fact, in the machine according to the present invention the manipulator group is rotatable in the operative gripping position of the slab or of the pieces obtained therefrom, in which operative position the manipulator group stays as long as necessary, to then be brought back into a non-operative position.

This feature allows to use the same system of axes X, Y, Z, W and R relative to the first electrospindle and, therefore, the same moving devices also for the manipulator group.

The operation and control unit of the machine will therefore use a single system of axes for the movement both of the first electrospindle, and of the manipulator group, avoiding the correlation of distinct reference systems, with obvious simplifications of the operation of the machine as a whole.

Basically, the manipulator group and the first electrospindle rotate integrally about the aforementioned axis R perpendicular to the vertical axis Z, in other words parallel to the working plane in the cutting configuration of the machine, and are simultaneously rotated about said axis R by the same actuator device described above and active on the first electrospindle.

Preferably, the manipulator group is associated to or incorporated in a protective casing of the cutting disc driven by the first electrospindle.

In this way, it is advantageously possible to achieve the technical effects described above with a structural configuration of the machine that is very simple and compact.

Preferably, the first electrospindle is thus rotatable between an operative position, wherein the cutting disc driven by the first electrospindle can interact with the slab material being machined and the manipulator group is in a respective first non-operative position distal with respect to the working plane, and a second non-operative position, wherein the cutting disc cannot interact with the slab and the manipulator group is in a second operative position proximal with respect to the working plane.

Preferably, the rotation of the manipulator group and of the first electrospindle is comprised between 0° and 90°.

Preferably, the manipulator group and the first electrospindle, describe during rotation corresponding arcs of circumference.

Therefore, in the respective operative position (proximal to the material to be machined) the manipulator group is at the same height along the axis Z occupied by the cutting disc when the latter is operative.

Preferably, the manipulator group comprises gripping means of the suction type, preferably of pneumatic type.

Preferably, the gripping means comprise at least one plate, provided with at least one suction cup, more preferably a plurality of suction cups.

Preferably, this plate can be incorporated in a protective casing of the cutting disc driven by the first electrospindle, in other words form an integral part of the casing, for example and preferably a front closing door of the casing, or it can be associated to such a protective casing outside of the same. In this latter case, the plate of the gripping means is preferably associated to the protective casing of the cutting disc, or to other parts of the first electrospindle, frontally with respect to the cutting disc.

Preferably, the gripping means comprise one or more air suction ducts which open in each suction cup. For example, each suction cup can be defined by a shaped gasket applied to the plate so as to circumscribe a portion of the corresponding surface and the suction ducts are partially formed in the material of the plate and open in the surface delimited by the gasket.

Preferably, the manipulator group comprises one or more intercepting valves of the suction ducts. Such valves can be arranged along sections of the corresponding ducts outside of the plate, or they can be coupled directly to the plate.

Preferably, the intercepting valves are solenoid valves which may be driven by the operation and control unit of the machine.

When the gripping means are in abutment against the slab material being machined or already machined, in practice when the gripping means of the manipulator group are arranged in the second operative position and resting on the material, the gaskets are at least partially compressed against the upper surface of the slab material; the opening of the intercepting valves of the suction ducts allows a depression to be created in the volume comprised between the slab material and the gripping means, actually achieving a suction effect.

In this operating mode, the lifting along the axis Z of the first electrospindle and of the manipulator group associated thereto, carried out by the supporting equipment of the first electrospindle, causes the corresponding lifting of the slab being machined that can consequently be repositioned using the moving apparatus of the first electrospindle. The closure of the suction ducts and the introduction of compressed air in the volume comprised between the material and the gripping means causes a pressure recovery and the consequent release of the slab material.

In a preferred embodiment, the machine according to the invention may be equipped with a proximity sensor or with a limit switch, arranged on the manipulator group or on the first electrospindle, having the function of signalling when the manipulator group or the first electrospindle is at a predetermined distance from the material being machined. The signal generated by the sensor, suitably processed, can be used to prevent violent collisions of the manipulator group against the slab material being machined.

Finally and as stated above, the machine preferably comprises an operation and control unit of the movements of the components described above of the machine, in other words of the supporting equipment of the first electrospindle and of the additional electrospindles rotationally and translationally integral therewith, of the moving apparatus of the first electrospindle and of the additional electrospindles integral therewith with respect to the working plane, of the second and, if present, of the third electrospindle with respect to the first electrospindle and with respect to the working plane and of the manipulator group if present.

In this way, it is advantageously possible to carry out a wide variety of machining operations by suitably programming the operation and control unit with a minimum labour intervention.

### Brief description of the figures.

Additional features and advantages of the present invention will become more clearly apparent from the following description of some preferred embodiments thereof, made hereinafter, for illustrating and not limiting purposes, with reference to the attached drawings. In such drawings:
- figure 1 is a schematic perspective view of a preferred embodiment of a machine for machining slab materials according to the invention;
- figure 2 is a schematic perspective view of some details of the machine of figure 1, in particular of the electrospindles and of the respective moving devices and apparatuses, in a first operative configuration of the machine;
- figure 3 is a schematic perspective view of some details of a braking device which may to be used in a further preferred embodiment of the machine shown in figure 1;
- figure 4 is a schematic perspective view of two rings forming part of the braking device shown in figure 3;
- figure 5 is a schematic perspective view from below of the electrospindles of the machine shown in figure 1 and of some devices for moving them;
- figure 6 is a schematic perspective view from above of some details of the moving apparatus of the first electrospindle and of the respective supporting equipment;
- figures 7a-7g are schematic front views of the electrospindles and of some details of the machine shown in figure 1 in as many working configurations of the machine;
- figure 7h is a schematic front view of the first electrospindle of the machine of figure 1 wherein the machining tool is an end mill and wherein such a tool is in a working configuration of the machine;
- figure 8 is a schematic perspective view similar to figure 2 of some details of an alternative preferred embodiment of the machine of figure 1;
- figure 9 is a schematic perspective view similar to figure 2 of some details of an additional preferred embodiment of the machine of figure 1;
- figure 10 is a schematic perspective view from below of the electrospindles of the machine shown in figure 9 and of some devices for moving them;
- figure 11 is a plan view from below of the electrospindles of the machine shown in figure 9 and of some devices for moving them in an operative configuration of the machine wherein two cutting discs are at a close range.

### Detailed description of the currently preferred embodiments of the invention

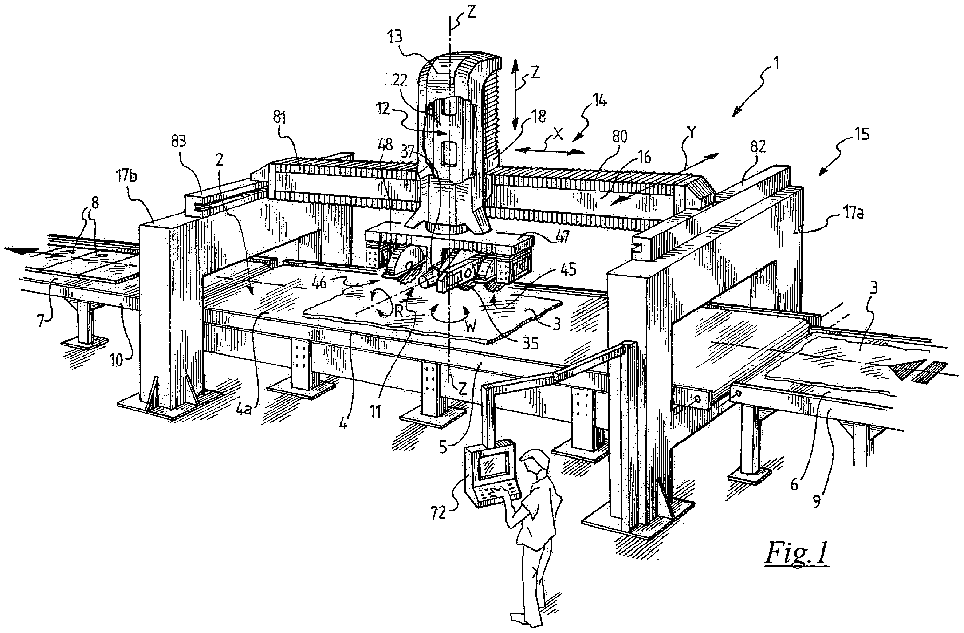

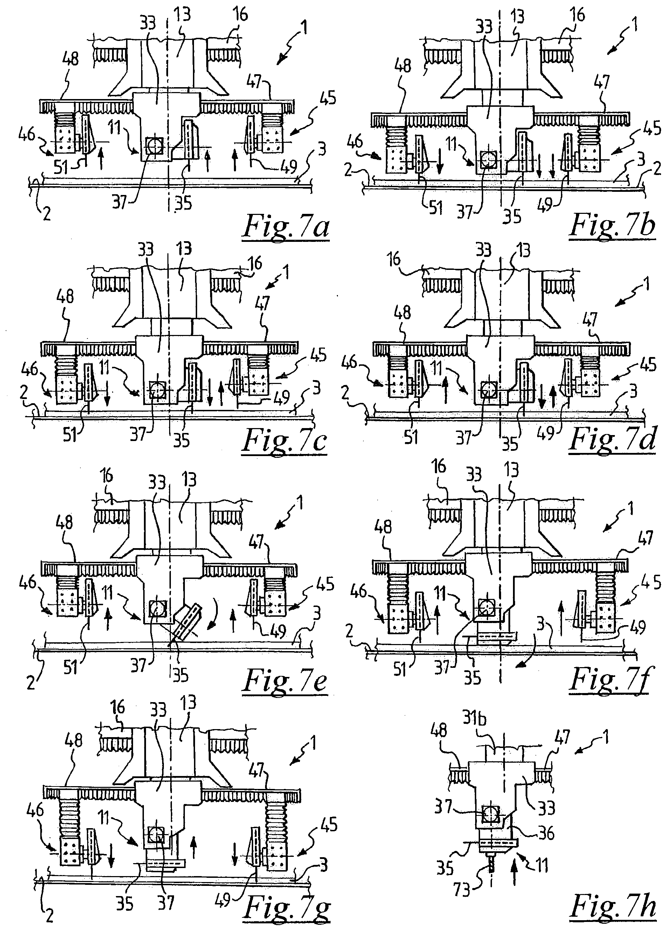

With reference to figures 1-7h, a machine for machining slab materials 3, in particular for large-scale production of pieces of standard dimensions, such as for example tiles, skirtings or kitchen counters, according to a first preferred embodiment of the invention, is generally indicated at 1.

The slab material 3 which may be machined with the machine 1 can be a natural stone material, such as for example marble, an agglomerated stone material, a ceramic or glass material without this being in any way limiting.

The machine 1 comprises a working plane 2 configured to support the slab material 3 to be machined, for example a slab of marble.

The working plane 2 can for example be defined by the upper surface 4a of a conveyor belt 4 supported in a conventional manner by a frame 5.

In an alternative preferred embodiment, not shown, the working plane 2 can be defined by a fixed table supported by a frame in a way known *per se.*

The conveyor belt 4 is operatively connected to a second conveyor belt 6 configured to feed the slab material 3 to be machined to the working plane 2 and to a third conveyor belt 7 configured to transport pieces 8 obtained from the slab material 3 by means of the machine 1 towards further machining operations, towards storage or towards packaging.

Preferably, the conveyor belts 6 and 7 are supported by respective frames, conventional *per se*, indicated at 9 and 10.

In this way, it is advantageously possible to speed up as much as possible the feeding and removing operations of the pieces to/from the working plane 2, as required in the case of large-scale production of pieces 8 of standard dimensions.

Thus, for example, the pieces 8 can be marble tiles of standard dimensions.

In the preferred embodiment illustrated in figure 1, the working plane 2 is stationary during the machining operations carried out with the machine 1.

Alternatively, the working plane 2 can be motorised and rotatable about the vertical direction, in which case it is necessary to equip the conveyor belt 4 (or the table) with a suitable moving apparatus.

The machine 1 comprises a first tool-holder electrospindle 11 supported above the working plane 2 by a respective supporting equipment 12 perpendicularly movable with respect to the working plane 2.

The first electrospindle 11 directly rotates a machining tool, for example a respective cutting disc 35, and comprises a motor 36, preferably a liquid-cooled electric motor of very small size.

In order to carry out other machining operations on the slab, such as for example drilling or grinding, the machining tool driven by the first electrospindle 11 can be an end mill (as illustrated for example in figure 7h which will be further discussed hereinafter), a grinder, or other tool suitable for the purpose.

In this case, the electrospindle 11 is preferably and advantageously provided with gripping means for a tool-holder connection so as to associate an additional machining tool to the drive shaft of the motor 36.

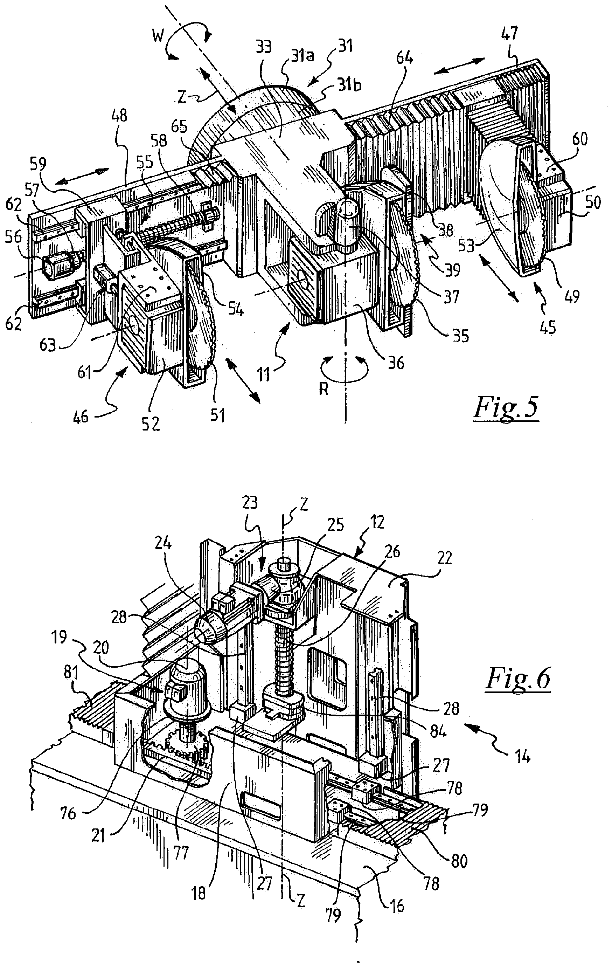

The machine 1 further comprises a moving apparatus 14 configured to move the first electrospindle 11 and the respective supporting equipment 12 in parallel to the working plane 2 and along directions perpendicular to one another (see figure 6).

According to the conventions used in the art and as outlined above, these translation directions perpendicular to one another and parallel to the working plane 2 will be designated hereinafter as direction or axis X and direction or axis Y.

In a manner conventional *per se*, the machine 1 further comprises a supporting structure 15 having the function of maintaining the first electrospindle 11, the respective supporting equipment 12 and the moving apparatus 14 suspended above the working plane 2 on which the slab material 3 to be machined is positioned.

In the preferred embodiment shown in figure 1, the supporting structure 15 comprises a horizontal bridge 16 which rests, at opposite ends thereof, on vertical supporting structures or shoulders 17a, 17b extending along a direction perpendicular to the bridge 16 itself. The supporting structure 15 thus comprises at least the elements 16, 17a and 17b.

Preferably, the moving apparatus 14 comprises a motorised carriage 18, configured to be moved on the bridge 16 in parallel to the axis X by the action of a respective actuator device 19 (see figure 6), for example comprising an electric motor 20 which rotates by means of a gear motor 76, for example and preferably a zero-clearance gear motor, a gear wheel 77 engaged with a rack 21, fixed in a way known *per se* to the bridge 16.

In this way, the actuator device 19 is configured to move along the axis X the motorised carriage 18 and the elements of the machine 1 associated thereto.

Preferably, the movement of the motorised carriage 18 along the bridge 16 (direction X) is advantageously guided thanks to the engagement of respective carriages 78, fixed to the motorised carriage 18, with respective linear guides or sliding blocks 79 fixed on the bridge 16 (see figure 6).

In this way, it is advantageously possible to have a precise movement along the horizontal direction and along the axis X of the motorised carriage 18 and of the components associated thereto (the first electrospindle 11 and the respective supporting equipment 12).

Preferably, the linear guides 79 and in general the upper part of the bridge 16 are advantageously protected from the outside by means of a pair of protective casings 80, 81 preferably of the bellows type and positioned at opposite sides of the motorised carriage 18.

In turn and in an equally conventional manner not shown in the figures, the bridge 16 is movable along runways 82, 83 supported by the vertical supporting structures 17a, 17b perpendicularly to the bridge thanks to the action of an actuator device, conventional *per se* and not shown, configured to move the bridge 16 in parallel to the axis Y.

The supporting equipment 12 of the first electrospindle 11 is preferably housed in a protective casing 13 and is movable perpendicularly to the working plane 2.

Preferably, the supporting equipment 12 comprises a substantially plate-shaped supporting body 22, driven along a direction perpendicular to the working plane 2 by a respective actuator device 23 supported by the carriage 18 and arranged in the upper part of the supporting equipment 12 (see figures 1, 2 and 6).

Preferably, the supporting equipment 12 also has the function of guiding supply lines conventional *per se*, not shown, towards the first electrospindle 11.

In a way known *per se*, these supply lines preferably comprise at least one electrical supply line and at least one supply line of a cooling fluid, for example water, intended to cool the machining tool driven by the first electrospindle 11 (for example the cutting disc 35) and the cutting discs of the additional electrospindles of the machine 1 which will be further described hereinafter. Preferably, the supply lines are fixed to the body 22 in a conventional manner.

Preferably, the actuator device 23 of the supporting equipment 12 is a linear actuator and comprises an electric motor 24 which rotates a ball screw 26 by means of a gear motor 25, preferably having zero clearance.

In the preferred embodiment illustrated, the ball screw 26 is fixed to the body 22 of the supporting equipment 12 and is in screwing engagement in a nut screw block 84 fixed to the motorised carriage 18.

Preferably, the movement of the supporting equipment 12 along the vertical direction (direction Z) is advantageously guided thanks to the engagement of respective carriages 27, fixed to the motorised carriage 18, with respective linear guides or sliding blocks 28 fixed to the body 22 (see figure 6).

In this way, it is advantageously possible to have a precise movement along the vertical direction (axis Z) of the supporting equipment 12 and of the first electrospindle 11 associated thereto.

The supporting equipment 12 movable perpendicular to the working plane 2 is also configured to move the first electrospindle 11 about the axis Z perpendicular to the working plane.

According to the conventions in use in the art and as illustrated above, such a direction of rotation (illustrated with a double arrow in figure 1) will also be called hereinafter axis W.

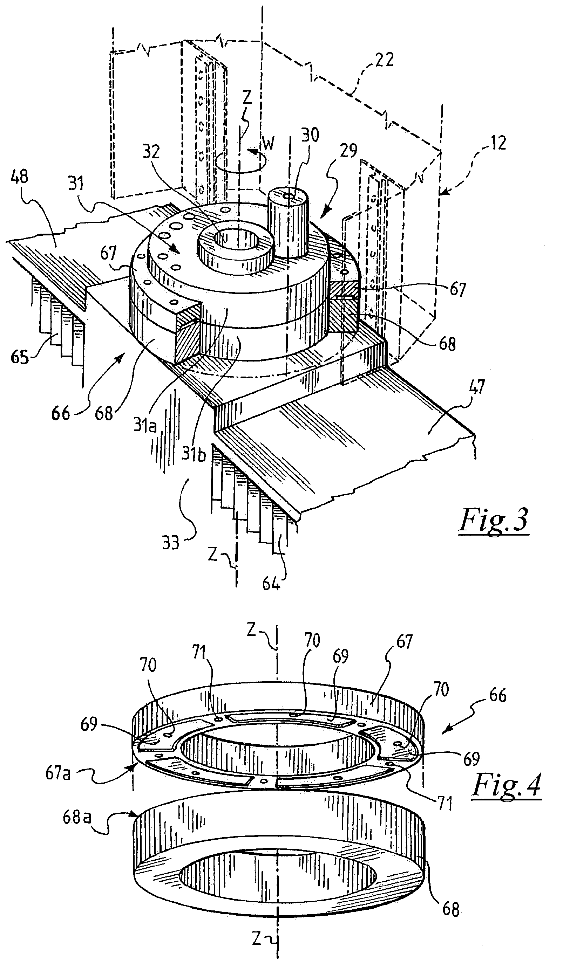

To this end, the supporting equipment 12 comprises a respective actuator device 29 supported by the supporting equipment 12 and preferably arranged in the lower part of the substantially plate-shaped body 22 (see figure 3).

Preferably, the actuator device 29 comprises an electric motor 30, preferably, of the brushless type, which rotates the first electrospindle 11 about the axis Z by means of a gear motor 31 having parallel axes, preferably with zero clearance.

Preferably, the gear motor 31 is ring-shaped and comprises a central through hole 32 in which electrical power cables and the ducts for supplying the cooling fluid (not illustrated) necessary for the operation of the first electrospindle 11 and of the additional electrospindles of the machine 1 are received, which electrospindles will be further discussed hereinafter.

Preferably, the gear motor 31 comprises a fixed upper part 31a associated to the supporting equipment 12 and a lower part 31b movable with respect to the supporting equipment 12.

In the preferred embodiment illustrated, the first electrospindle 11 is rotatably mounted on a supporting body 33, which is in turn preferably provided with a fork-shaped end 34, which body is associated to a lower end of the supporting equipment 12 of the first electrospindle 11 proximal to the working plane 2 (see figures 3 and 5).

More specifically, the electrospindle 11 is rotatably supported by the supporting body 33 about a respective axis (or direction) of rotation R, perpendicular to the vertical axis Z, by means of rotation pins, not shown.

In practice, the first electrospindle 11 and the cutting disc 35 may be rotated with respect to the supporting body 33. In this sense, the first electrospindle 11 is rotatable about the axis R (the supporting body 33, on the other hand, does not rotate about the same axis or direction of rotation R).

In the preferred embodiment illustrated, the supporting body 33 is in turn preferably fixed to the mobile part 31b of the gear motor 31 supported in the lower part of the supporting equipment 12 and with which it is rotationally integral about the axis Z.

In this way, it is advantageously possible to have a precise movement of the supporting body 33 and of the first electrospindle 11, supported by the same and rotatably mounted thereon, about the axis Z (rotation axis W) so as to achieve the desired cutting direction.

In the preferred embodiment illustrated in the figures, the machine 1 comprises a motor 37 configured to move the first electrospindle 11 about the rotation axis R to vary the angle of inclination of the electrospindle 11 with respect to a plane perpendicular to the working plane 2 on which the slab material 3 to be machined is arranged.

In this way, the cutting disc 35 of the first electrospindle 11 can be moved according to an additional direction of movement, indicated in the figures with the double arrow R, to easily make, for example, inclined cuts with respect to the vertical, horizontal cuts, drilling operations when the machining tool is an end mill or edge-shaping of the slab material 3 when the machining tool is a grinder.

Preferably, the cutting disc 35 is at least partially enclosed in a protective casing 38 as shown in the figures.

In the preferred embodiment illustrated, the machine 1 comprises a manipulator group 39 of the slab material 3 to be machined and/or of the pieces 8 obtained therefrom, rotationally and translationally integral with the first electrospindle 11.

In particular, the manipulator group 39 exerts the advantageous function of moving the slab material 3 to be machined and/or the pieces 8 obtained from such material, in particular picking them up from the working plane 2 or repositioning them back thereon according to the operations to be carried out.

Preferably, the manipulator group 39 is arranged in parallel to a cutting plane extending perpendicularly to the working plane 2 and frontally with respect to the first electrospindle 11.

In this way and as will become more clearly apparent hereinafter, the manipulator group 39 is able to move the slab material 3 to be machined and/or the pieces 8 obtained therefrom in an operative configuration of the machine 1 wherein the cutting disc 35 is in a non-operative position.

In a particularly preferred embodiment, the manipulator group 39 is incorporated in the protective casing 38 of the cutting disc 35 driven by the first electrospindle 11.

More preferably, the manipulator group 39 is incorporated in a front closing door 44 of the protective casing 38 pivotally mounted on the casing itself.

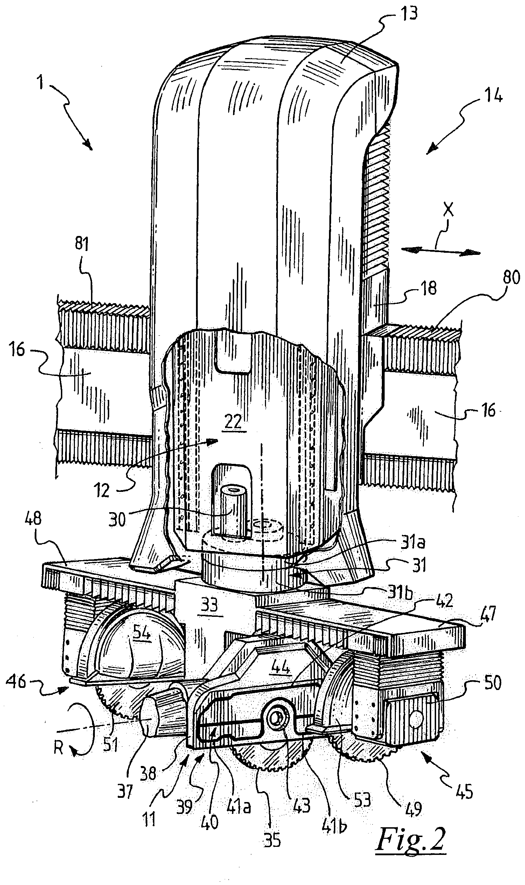

Preferably, the manipulator group 39 comprises gripping means 40 of the suction type, preferably of the pneumatic type (see in particular figure 2).

In the preferred embodiment shown in the figures, the gripping means 40 are provided with a plurality of pneumatically-activated suction cups, and can be rotated between an initial non-operative position, wherein the suction cups cannot interact with the slab material 3 independently of the position of the supporting equipment 12 of the first electrospindle 11, and a final operative position, wherein the suction cups may engage the upper surface of the slab material 3 when the supporting equipment 12 of the first electrospindle 11 is lowered along the axis Z towards the slab material 3.

Thanks to this preferred configuration of the manipulator group 39, the gripping means 40 are translationally and rotationally integral with the first electrospindle 11 and are therefore rotatable therewith about the axis R between a first non-operative position and a second operative position.

More particularly, the first non-operative position of the gripping means 40 is vertical, as shown in figures 1, 2, 5 and 7a-7d, and corresponds to a working position of the cutting disc 35 that lies on a cutting plane perpendicular to the upper surface of the slab material 3.

Conversely, the second operative position of the gripping means 40 is horizontal - perpendicular to the cutting plane and parallel to the working plane 2 - as shown in figure 7f, and corresponds to a non-operative position of the cutting disc 35, which lies parallel to the upper surface of the slab material 3.

The rotation of the first electrospindle 11, and therefore of the gripping means 40 may preferably vary between about 0° and about 90°.

Preferably and as is shown in the attached figures, the motor 37 which rotates the first electrospindle 11 about the axis R is at least partially integrated with at least one of the rotation pins. Preferably, the motor 37 is a brushless motor. Moreover, the motor 37 preferably comprises a reducer (not shown in the figures) preferably with a zero clearance.

Preferably, the suction cups are defined in the gripping means 40 by one or more gaskets which delimit one or more areas on the surface of the closing door 44 of the casing 38 (the surface that can be facing in parallel to the working plane 2 and to the upper surface of the slab material 3 arranged thereon). Preferably, the areas delimited by the gaskets have a closed perimeter, for example circular, rectangular, or having a different shape.

In the preferred embodiment illustrated and as can be better seen in figure 2, the gripping means 40 of the manipulator group 39 preferably comprise three gaskets 41a, 41b and 42 inserted in respective grooves formed in the material of the closing door 44 of the casing 38. Preferably, the gaskets 41a, 41b and 42 define corresponding substantially rectangular portions of the surface of the closing door 44 of the casing 38.

Preferably, the manipulator group 39 also comprises air suction means (not shown) in fluid communication with the aforementioned portions wherein they are capable of creating a predetermined vacuum degree in a conventional manner, for example by means of a vacuum pump or a Venturi tube.

Preferably, the closing door 44 of the casing 38 is also provided with a through hole 43 (see figure 2) or, alternatively, with a cut-off, so as to allow access to the free end of the drive shaft of the electrospindle 11 so as to mount other machining tools thereon, such as for example an end mill (see figure 7h) or a grinder replacing or in addition to the cutting disc 35 by means of suitable connecting means conventional *per se* and not shown.

When the gripping means 40 are in the operative position, and therefore horizontal, and are brought together with the electrospindle 11 by the vertically movable supporting equipment 12 in abutment against the upper surface of the slab material 3, the air suction means are activated so as to generate a depression within the volumes delimited by the slab material 3 and by the gaskets 41a, 41b and 42.

Preferably, the depression is adjusted to obtain an effective suction effect which allows to lift the slab material 3 along the axis Z together with the first electrospindle 11.

Preferably, the manipulator group 39 further comprises one or more intercepting valves (not shown) of the air flow from and towards the air suction means.

The intercepting valves are preferably solenoid valves and each one of them may be operated independently from the others to cause a depression in just one of the suction cups, for example in the suction cup defined by the gasket 42, or in all of the suction cups defined by the gaskets 41a, 41b and 42. The solenoid valves can be outside of the closing door 44, or alternatively they can be arranged on the same door or within a housing associated thereto or further on other parts of the casing 38.

In the preferred embodiment illustrated in the attached figures, the machine 1 further comprises a second and a third tool-holder electrospindle, 45, 46, rotationally and translationally integral with the first electrospindle 11 and supported above the working plane 2 in parallel to the first electrospindle 11 by respective supporting elements 47, 48 fixed to the supporting equipment 12 of the first electrospindle 11.

The second electrospindle 45 directly rotates a respective second cutting disc 49 and comprises a motor 50, preferably a liquid-cooled electric motor of very small size.

In a totally similar way, the third electrospindle 46 directly rotates a respective third cutting disc 51 and comprises a motor 52, preferably a liquid-cooled electric motor of very small size.

Preferably, the cutting discs 49 and 51 are at least partially enclosed in respective protective casings 53, 54 as shown in the figures.

Preferably, the second and the third electrospindle 45, 46 are supported by the respective supporting elements 47, 48 at opposite sides with respect to the first electrospindle 11.

In this way, it is advantageously possible to obtain a symmetrical and balanced distribution of the masses involved to the benefit of the operation stability of the machine 1.

Preferably, the supporting elements 47, 48 laterally extend in a cantilevered fashion from the supporting equipment 12 of the first electrospindle 11.

Preferably, the supporting elements 47, 48 are also substantially plate-shaped, for example consisting of lightened plates of metallic material, and preferably have their faces of larger size parallel to the working plane 2 as illustrated in the figures.

In this way, it is advantageously possible to obtain a substantially "wing-shaped" configuration of the supporting elements 47, 48 of the second and third electrospindles 45, 46 which allows to support the electrospindles 45, 46 in a very simple manner, by using low weight and low cost elements.

In this way, it is also advantageously possible to support all the electrospindles 11, 45 and 46 of the machine 1 with a machine which is structurally simple and of small size and having an improved operational stability thanks to the reduced forces of inertia involved.

Preferably, the supporting elements 47, 48 laterally extend in a cantilevered fashion from the supporting body 33 of the first electrospindle 11 and, still more preferably, they are directly fixed to said body.

In a preferred embodiment, the supporting elements 47, 48 are integral with the supporting body 33 of the first electrospindle 11.

In this way, it is advantageously possible to achieve suitable rigidity and strength characteristics of the supporting elements 47, 48 and characteristics of constructive simplicity and low costs of the machine 1.

The machine 1 further comprises for each of the additional electrospindles 45 and 46 additional actuator devices configured to:
i) move each of the additional electrospindles 45 and 46 independently from each other towards and away from the first electrospindle 11 in parallel to the working plane 2, and
ii) move each of the additional electrospindles 45 and 46 independently from each other along a direction substantially perpendicular to the aforementioned plane.

Preferably, these additional actuator devices are identical to each other and only those of the third electrospindle 46 will be illustrated in detail hereinafter with reference to figure 5.

It should be understood that the configuration of the machine 1 illustrated herein is only one of the possible preferred embodiments, for which reason the aforementioned actuator devices can also be selected by a person skilled in the art so as to be different from each other and/or different from the preferred ones illustrated herein merely as an exemplary embodiment and, this, as a function of specific application requirements.

Referring now in particular to figure 5, the machine 1 comprises for each electrospindle 45, 46 an actuator device 55 configured to move the second electrospindle 45 or the third electrospindle 46 towards and away from the first electrospindle 11 in parallel to the working plane 2 and along a direction substantially perpendicular to a cutting plane extending perpendicularly to the working plane itself.

Preferably, the actuator device 55 is a linear actuator preferably of the ball screw type.

More particularly, the actuator device 55 preferably comprises an electric motor 56 which rotates a ball screw 58 to which a carriage 59 is engaged, by means of a gear motor 57, preferably with a zero clearance. The electrospindles 45, 46 are fixed to the carriage 59 by means of respective supporting bodies 60, 61 preferably provided with a fork-shaped end.

In this way, it is advantageously possible to have a precise movement along the horizontal direction of the electrospindles 45, 46, the movement of which in parallel to the working plane 2 is preferably and advantageously further guided by linear guides or sliding blocks 62.

Still referring to figure 5, the machine 1 comprises for each electrospindle 45, 46 an additional actuator device 63 configured to move the second electrospindle 45 or the third electrospindle 46 along a direction perpendicular to the working plane 2 independently of the first electrospindle 11.

Preferably, the actuator device 63 is fixed in a way known *per se* not better shown in the figures to the supporting bodies 60, 61 fixed to the carriage 59 of the actuator device 55.

In this way, the second electrospindle 45 and the third electrospindle 46 can be advantageously moved along a direction perpendicular to the working plane 2 independently from each other and independently from the first electrospindle 11 when this is necessary to carry out the desired machining on the slab material 3.

This additional movement of the electrospindles 45, 46 along a direction perpendicular to the working plane 2 is thus independent and additional with respect to the movement - which takes place integrally for the three electrospindles 11, 45 and 46 - achieved thanks to the movement along the vertical direction (axis Z) of the supporting equipment 12 of the first electrospindle 11, which equipment is integral with the electrospindles 45 and 46 by means of the supporting elements 47, 48.

In a first preferred embodiment and as illustrated in figure 5, the actuator device 63 is a pneumatic actuator.

In this way, it is advantageously possible to move the electrospindles 45 and 46 along a vertical direction from and towards the slab material 3 by means of a device which is simple to control and inexpensive.

In a further preferred embodiment, not illustrated, the actuator device 63 can be an electromechanical actuator, in particular and preferably, a linear actuator.

In this way, it is advantageously possible to move the electrospindles 45 and 46 along the vertical direction from and towards the slab material 3 in a very precise manner if this is required by the machining requirements.

Advantageously, the actuator devices 55 and 63 described above are supported by the supporting elements 47, 48 of the electrospindles 45 and 46 and are preferably protected from the outside environment by means of respective protective casings 64, 65 preferably of the bellows type.

In a preferred embodiment and as better illustrated in figure 3, the supporting equipment 12 of the first electrospindle 11 may comprise a braking device 66 configured to prevent relative rotation movements between the part of the supporting equipment 12 not rotatable about the axis Z (the body 22 and the fixed part 31a of the gear motor 30 fixed thereto) and the part of such equipment 12 rotatable about the axis Z (the mobile part 31b of the gear motor 30) and associated to the first electrospindle 11 and, consequently, to the additional electrospindles 45, 46 translationally and rotationally integral therewith.

Advantageously, the braking device 66 substantially completely absorbs the torsion stresses that develop in the case of cuts, for example oblique cuts, carried out with the cutting disc driven by the second 45 or by the third electrospindle 46 and spaced apart with respect to a fulcum represented by the vertical rotation axis Z of the first electrospindle 11.

In this way, it is advantageously possible to drastically reduce if not substantially eliminate a premature wearing of the gears of the moving device 29, for example of the gear motor 31, used in the machine 1 to rotate both the first electrospindle 11 and the additional electrospindles 45, 46 integral therewith about the vertical axis Z thereby contributing to ensure the cutting precision of the machine 1 over time.

Preferably, the braking device 66 comprises a pair of superimposed rings 67, 68, respectively upper and lower, coaxially mounted with respect to the fixed upper part 31a and lower mobile part 31b of the gear motor 31 to which they are fixed in a conventional manner, not shown.

In this preferred embodiment, the braking device 66 thus forms part of the actuator device 29 configured to move the first electrospindle 11 about the axis Z perpendicular to the working plane (axis W) and arranged in the lower part of the substantially plate-shaped body 22 of the supporting equipment 12.

Preferably, the braking device 66 is of the depression type, i.e. it carries out its braking action by creating a suitable vacuum degree between facing surfaces 67a, 68a of the superimposed rings 67, 68.

To this end, the ring 67 is provided with a plurality of depressions 69 formed at its surface 67a each of which is in fluid communication, in a manner conventional *per se*, not shown, and by means of respective through holes 70, with air suction means (not shown) capable of creating a predetermined vacuum degree, for example by means of a vacuum pump or a Venturi tube, in the volumes defined in the depressions 69 when the rings 67, 68 are in contact with each other.

Preferably, the ring 67 is provided with a plurality of additional through holes 71 in fluid communication, in a way conventional *per se* and not shown, with means for feeding pressurised air, such as for example a compressed air tank or a compressor.

In this way, it is advantageously possible to reduce and substantially eliminate the friction forces between the rings 67, 68 when the supporting body 33 of the electrospindle 11 and the electrospindles 45, 46 associated thereto are rotated about the axis Z (direction W) by feeding pressurised air between the rings 67, 68 by means of the holes 71.

The machine 1 finally comprises an operation and control unit 72 (figure 1) equipped with an operator interface. The unit 72 is programmed to control the machine 1 in carrying out the required machining operations on the slab material 3.

With reference to figures 1 to 7g a preferred method for machining slab materials 3 which may be carried out by means of the machine 1 described above will now be described.

The method essentially comprises the step of providing the slab material 3 to be machined on the working plane 2 for example by means of the conveyor belts 4 and 6 and thereafter the step of moving the assembly formed by the three electrospindles 11, 45 and 46 associated to the supporting equipment 12 (in this case by means of the supporting body 33 of the first electrospindle 11 and the supporting elements 47, 48 of the second and of the third electrospindle 45, 46) to carry out a machining operation on the slab material 3.

For example, such a machining operation can consist in obtaining tiles 8 of standard dimensions from the slab material 3.

The movement of the electrospindles 11, 45 and 46 is obtained, according to the direction of movement:
- by means of the moving apparatus 14 of the first electrospindle 11, which in the machine 1 of the invention also simultaneously moves the additional electrospindles 45 and 46 translationally integral with the first electrospindle 11, along the directions X and Y, i. e. in parallel to the working plane 2 and to the slab material 3 supported by the same;
- by means of the actuator device 23 of the supporting equipment 12 of the first electrospindle 11, along the direction Z, i.e. perpendicularly to the working plane 2 and to the slab material 3 supported by the same;
- by means of the actuator device 29 of the first electrospindle 11 (in this case configured to rotate the supporting body 33) about the axis Z perpendicular to the working plane 2 (direction W).

All this according to a work programme stored in the operation and control unit 72.

In a first step and as illustrated in figure 7a, the second and the third electrospindle 45 and 46, i.e. the lateral electro spindles, are positioned at the desired distance with respect to the central electrospindle 11 by means of the respective actuator devices 55.

Thereafter, the cutting assembly formed by the three electrospindles 11, 45 and 46 associated to the supporting equipment 12 is firstly lowered by the actuator device 23 until the cutting discs 35, 49 and 51 engage the slab material 3 (as illustrated in figure 7b) and then moved by the moving apparatus 14 along the desired cutting direction, for example along the direction Y.

Once this first cut has been made, the cutting assembly formed by the three electrospindles 11, 45 and 46 is then lifted and rotated by 90° about the axis Z by means of the actuator device 29 so as to bring the cutting discs 35, 49 and 51 into alignment with a cutting direction perpendicular to the previous one, so as to obtain the tiles 8.

If necessary, it is at this point possible to further adjust the distance between the cutting discs 35, 49 and 51 of the electrospindles 11, 45 and 46 by means of the actuator devices 55.

Thereafter, the cutting assembly formed by the three electrospindles 11, 45 and 46 associated to the supporting equipment 12 is again lowered by the actuator device 23 until the cutting discs 35, 49 and 51 engage the slab material 3 (again as illustrated in figure 7b) and then moved by the moving apparatus 14 along the new desired cutting direction, the direction X in this case.

Once the tiles 8 have been obtained, they can be carried away from the working plane 2 by means of the conveyor belt 4 and then sent to other operations or to storage by means of the conveyor belt 7.

Clearly and as foreseen in a conventional cutting machine, it is possible to carry out oblique cuts on the slab material 3 by suitably positioning the cutting assembly formed by the three electrospindles 11, 45 and 46 by means of the actuator device 29 and then operating the moving apparatus 14 so as to have simultaneous movements along the two directions X and Y.

In this way, the machine 1 of the invention is advantageously capable of achieving a high productivity, for example for a large-scale production of pieces of standard dimensions such as for example the tiles 8, whilst still being a machine of great constructive simplicity, which may be controlled substantially like a single-spindle cutting machine, and of low cost.

The reduced masses of the additional electrospindles 45 and 46 and of the respective actuator devices and fixing devices to the first electrospindle 11, also allow to maintain the cutting precision over time since the stresses applied to the gears of the gear motor 31 of the actuator device 29 are correspondingly reduced.

In the preferred embodiment wherein the braking device 66 is provided, such stresses can be further reduced to the benefit both of the cutting precision over time and of the useful life of the gear motor 31.

In an alternative embodiment and according to the machining specifications, the slab material 3 may be cut using only one or some of the cutting discs 35, 49 and 51 of the three electrospindles 11, 45 and 46 as schematically illustrated in figures 7c - 7d and 7g.

Thus, in the cutting configuration illustrated in figure 7c it is possible to use only the cutting discs 35 and 51 of the first and of the third electrospindle 11, 46. In order to do this, it is sufficient to lift the second electrospindle 45 by means of the respective actuator device 63 configured to move the electrospindle 45 perpendicularly to the working plane 2 independently from the remaining electrospindles 11 and 46.

Clearly, it is possible to carry out a similar machining operation with the electrospindles 11 and 45 by lifting the third electrospindle 46 by means of the respective actuator device 63.

If it is desired to carry out a single cutting operation it is also possible to use a single electrospindle. Preferably and for reasons of practicality and balance of the machine 1, the central electrospindle 11 is used in this case according to the cutting configuration illustrated in figure 7d.

In this case, both the second and the third electrospindle 45, 46 are lifted by means of the respective actuator devices 63.

If it is desired to make a pair of cuts at a relatively large distance, for example comprised between about 70 and about 124 cm, it is also possible to lower only the second and the third electrospindle 45, 46 towards the slab material 3 by means of the respective actuator devices 63 while keeping the cutting disc 35 of the central electrospindle 11 spaced apart from the slab material 3.

In this case and as illustrated in figure 7g, it is advantageously possible to obtain this spacing of the cutting disc 35 without lifting the supporting equipment 12 of the first electrospindle 11 by rotating the central electrospindle 11 by 90° about the axis R by means of the motor 37 so as to arrange the respective cutting disc 35 horizontally in a non-operative position.

In this way, it is advantageously possible to have a constant and predetermined travel range of the actuator devices 63 that can in this case be advantageously implemented as pneumatic actuators, which are less expensive but capable of ensuring the positioning precision at only the limit positions according to an on-off type operating mode.

By means of the machine 1 described above it is thus advantageously possible to carry out parallel cuts at the desired distances in a mechanically simple manner so as to obtain a wide range of dimensions of the machined pieces, for example of the tiles 8.

Thus, for example, it is possible to obtain tiles 8 from the slab material 3 having dimensions of from 20x20 cm up to 62x62 cm by simultaneously using the three cutting discs 35, 49 and 51 of the three electrospindles 11, 45 and 46; and tiles 8 having dimensions of from 70x70 cm up to 124x124 cm by simultaneously using two cutting discs, for example the discs 35 and 49 or 51 or the discs 49 and 51.

In additional preferred embodiments and as outlined above, the machine 1 according to the invention may comprise a number of additional electrospindles rotationally and translationally integral with the first electrospindle 11 greater than two as a function of the specific application requirements aimed at increasing the productivity of the machine for large-scale productions.

The number of additional electrospindles can thus vary from two to eight or more according to configurations having from three to nine or more electrospindles in total.

When the additional electrospindles are more than two in number, as in the preferred embodiments illustrated in the figures, it is foreseen that these additional electrospindles are preferably configured in a manner similar to the electrospindles 45 and 46 and that they are preferably equipped with respective actuator devices and mechanisms for their movement along a direction parallel to the working plane 2 and along a direction perpendicular to such a plane totally analogous to those described above with reference to the attached figures.

Within the framework of the single cutting modes, the machine 1 according to the preferred embodiment of the invention is also capable of carrying out cuts of the slab material 3 according to directions inclined with respect to the vertical one in a very simple manner.

This type of cut may be advantageously carried out in manners similar to those of the known cutting machines provided with a single electrospindle by rotating the central electrospindle 11 and the cutting disc 35 about the axis R by means of the motor 37 so as to obtain the desired inclination as schematically illustrated in figure 7e.

The machine 1 according to the preferred embodiment of the invention also advantageously allows to carry out a machining method further comprising the step of modifying the position of the slab material 3 on the working plane 2, i.e. the step of repositioning the slab material or the pieces 8 obtained therefrom.

This step is carried out by means of the manipulator group 39.

Thus, for example, when it becomes necessary to reposition the slab material 3 as illustrated in figure 7f, the operation and control unit 72 activates the manipulator group 39, which in the cutting configuration of the machine 1 is in the non-operative position shown in figures 2, 5 and 7a-7d.

Such an activation takes place with the electrospindle 11 lifted with respect to the slab material 3 so that the manipulator group 39 and the respective gripping means 40 are vertically arranged and cannot come into contact with the slab material 3.

Specifically, the operation and control unit 72 rotates, by means of the motor 37, the first electrospindle 11 between an operative position, wherein the cutting disc 35 can interact with the slab material 3 and the manipulator group 39 is in a respective first non-operative position distal with respect to the working plane 2, and a second non-operative position, wherein the cutting disc 35 cannot interact with the slab material 3 and the manipulator group 39 is in a second operative position proximal with respect to the working plane 2.

At this point, the manipulator group 39 (translationally integral with the first electrospindle 11) is lowered by means of the actuator device 23 until it comes in contact with the slab material 3 (or with a tile 8) to be moved at least partially compressing the gaskets 41a, 41b and 42 as schematically illustrated in figure 7f.

The operation and control unit 72 opens the intercepting valves of the ducts for the fluid connection with the suction means to create the depression necessary to obtain a suction effect that is effective with respect to the weight of the slab material 3.

In this configuration, the slab material 3 (or, if applicable, the tile 8) remains attached to the gripping means 40 by means of the effect of the depression and can be moved by the moving apparatus 14, by the actuator device 23 and by the actuator device 29 into the new position foreseen based on the coordinates X, Y and Z and based on the rotation about the axis Z (axis W) programmed in the unit 72.

When the repositioning of the slab material 3 (tile 8) has been completed, the control unit 72 closes the intercepting valves and interrupts the supply of compressed air towards the suction cups of the gripping means 40 so as to obtain the pressure recovery in the suction cups and the release of the slab material 3 (tile 8).

The gripping means 40 are now released from the slab material 3 (tile 8) and the manipulator group 39 can be moved away therefrom and deactivated.

The deactivation of the manipulator group 39 foresees another rotation about the axis R to bring the gripping means 40 back into the initial non-operative position described above and at the same time reposition the cutting disc 35 back into its operative position ready for use.

Advantageously, the repositioning of the slab material 3 or of the tiles 8 is obtained without any additional calculation burden for the control unit 72, by simply exploiting the same reference system X, Y, Z, W and R and the respective algorithms and without the need to have an independent structure for supporting the manipulator group 39 as is provided on the contrary in the machines with a plurality of cutting groups of the prior art illustrated above.

In a preferred embodiment of the invention and as illustrated in figure 7h, the machining tool driven by the first electrospindle 11 can be an end mill 73 so as to carry out drilling operations on the slab material 3.

In this case, the working configuration of the first electrospindle 11 is the configuration illustrated in figure 7h, i.e. with the first electrospindle 11 rotated so as to arrange the cutting disc 35 (which can also be previously dismounted) in its horizontal non-operative position and the end mill 73 in its vertical operative position.

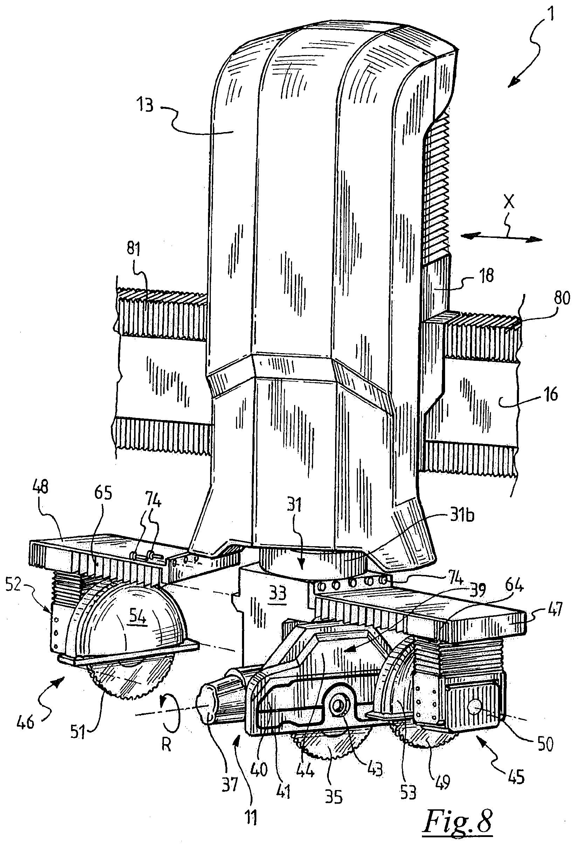

Figures 8-11 show additional preferred embodiments of a machine for machining slab materials according to the present invention, also generally indicated at 1.

In figures 8-11, structural elements that are identical or equivalent from the functional point of view to those of the machine 1 described above with reference to figures 1-7h, will be numbered in the same way and they will not be described any further.

In the preferred embodiment illustrated in figure 8, the machine 1 differs from the machine described above essentially in that the supporting elements 47, 48 of the second and of the third electrospindle 45, 46 are laterally fixed in a cantilevered fashion to the supporting body 33 by means of suitable fixing means, such as for example bolts 74.

In this way and thanks to the possibility of disassembling the supporting elements 47, 48, it is advantageously possible both to combine adequate rigidity characteristics of such supporting elements and characteristics of constructive simplicity and low costs of the machine 1, as well as to simplify the maintenance or replacement operations of the electrospindles 45 and 46 and of the respective actuator devices 55 and 63.

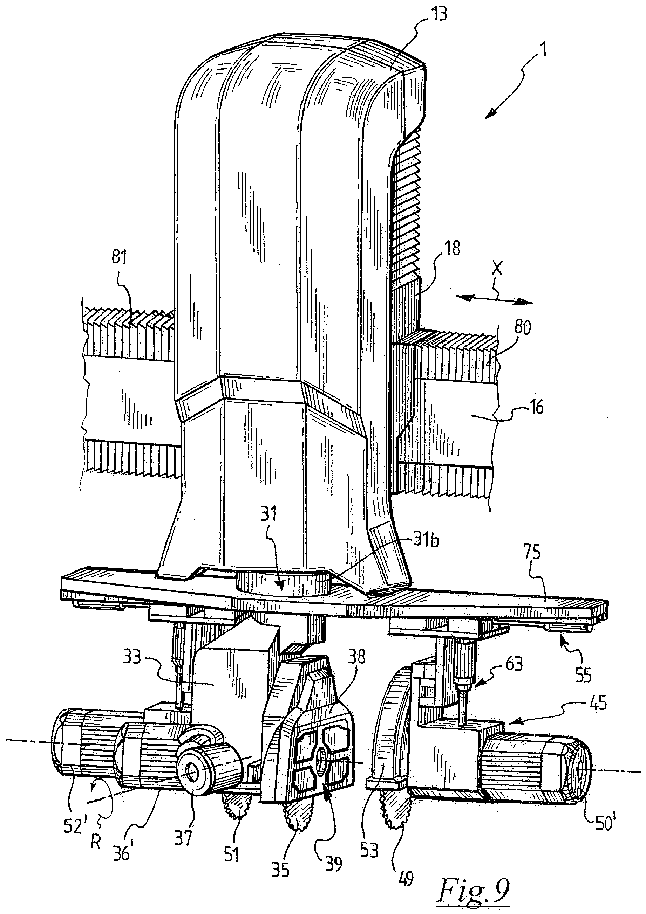

In the preferred embodiment illustrated in figures 9-11, the machine 1 differs from the machine previously described essentially in that the electrospindles 11, 45 and 46 comprise respective air-cooled electric motors 36', 50' and 52' and in that the second and the third electrospindle 45, 46 are supported by a single supporting element 75 laterally fixed in a cantilevered fashion to the supporting body 33 of the first electrospindle 11.

Such a supporting element 75 may be integrally made with the supporting body 33 of the first electrospindle 11 or may be laterally fixed in a cantilevered fashion to said body by means of suitable fixing means, not shown, in each case achieving the respective advantageous technical effects illustrated above.

Preferably, the supporting element 75 is of the plate-shaped type.

Preferably, the supporting element 75 is configured to support the electrospindles 11, 45 and 46 at an offset position along a direction substantially parallel to a cutting plane extending perpendicularly to the working plane 2.

Preferably, the electrospindles 11, 45 and 46 are further arranged so that the respective electric motors 36', 50' and 52' are arranged so as to achieve the minimum possible distance between at least two cutting discs, for example the discs 35 and 51 driven by the first and by the third electrospindle 11 and 46 as illustrated in figures 9-11.

More preferably, the supporting element 75 of the second and of the third electrospindle 45, 46 is configured to support such electrospindles at positions forming with the first electrospindle 11 a substantially triangle-shaped or "arrow-shaped" configuration of the electrospindles of the machine along a plane parallel to the working plane 2.

In this way, it is advantageously possible to reduce as much as possible the distance "d" between the cutting discs 35, 49 and 51 driven by the electrospindles 11, 45 and 46 even by using motors with air cooling that are less expensive but more bulky (especially in length) with respect to the liquid-cooled motors mentioned above with reference to the previous embodiments of the machine 1.

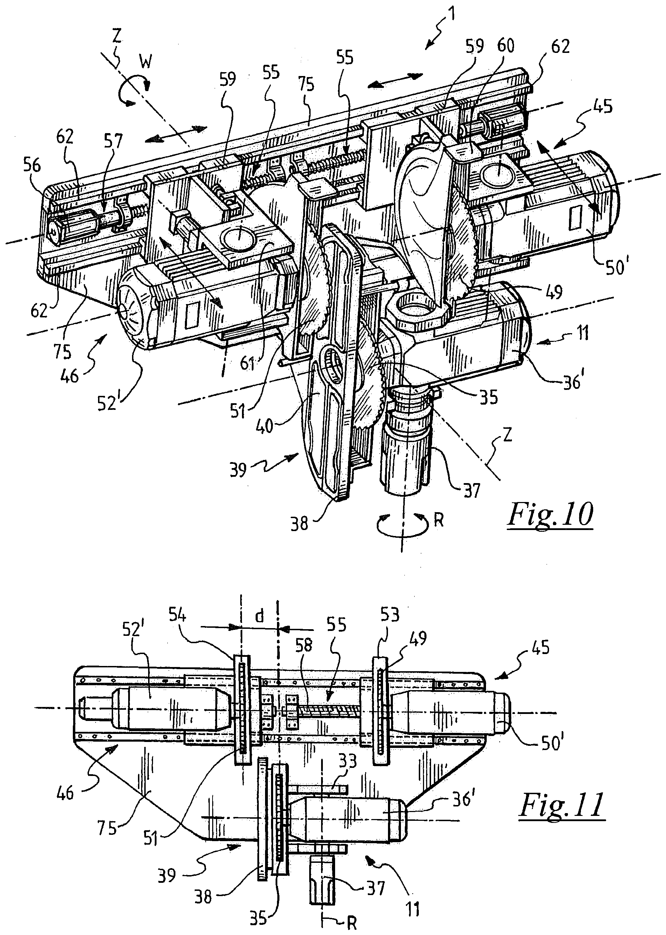

As illustrated in figure 11, the substantially triangle-shaped configuration of the electrospindles 11, 45 and 46 together with a suitable arrangement of the respective electric motors 36', 50' and 52' (at least two of which extend in parallel to each other on the same side with respect to the respective cutting discs) allows to bring two cutting discs close together, for example the discs 35 and 51 driven by the electrospindles 11 and 46 at a minimum distance only dictated by the size of the protective casing 38 and 54 similarly to what happens for the previous preferred embodiments of the machine 1 and this despite the size of the electric motors 36', 50' and 52' (see figure 11).

Advantageously, such a distance "d" may be of the order of 8 - 10 cm, totally compatible with large-scale machining of slab materials.

Clearly, a person skilled in the art can bring numerous modifications and variants to the machine and to the method for machining slab materials described above, in order to satisfy specific and contingent requirements, all of which are in any case encompassed by the scope of protection of the present invention as defined by the following claims.

## Claims

1. Machine (1) for machining slab materials comprising:
- a working plane (2) configured to support a slab material (3) to be machined;
- a first tool-holder electrospindle (11) supported above said working plane (2) by a respective supporting equipment (12), configured to move said first electrospindle (11) about a rotation axis (Z) perpendicular to the working plane (2);
- a moving apparatus (14) configured to move the first electrospindle (11) and the respective supporting equipment (12) in parallel to the working plane (2) and along directions (X, Y) perpendicular to one another;
- at least a second tool-holder electrospindle (45), rotationally and translationally integral with the first electrospindle (11), supported above said working plane (2) in parallel to the first electrospindle (11) by a respective supporting element (47) associated to the supporting equipment (12) of the first electrospindle (11);
- a first actuator device (55) configured to move said at least a second electrospindle (45) towards and away from said first electrospindle (11) in parallel to said working plane (2) and along a direction substantially perpendicular to a cutting plane extending perpendicularly to the working plane (2); and
- a second actuator device (63) configured to move said at least a second electrospindle (45) with respect to the working plane (2) independently of the first electrospindle (11);
said first (55) and second (63) actuator devices being supported by said supporting element (47) of said at least a second electrospindle (45), **characterised in that** said supporting equipment (12) of the first electrospindle (11) is perpendicularly movable with respect to the working plane (2) and **in that** said second actuator device (63) is configured to move said at least a second electrospindle (45) independently of the first electrospindle (11) along a direction perpendicular to the working plane (2).

2. Machine (1) according to claim 1, further comprising a third tool-holder electrospindle (46), rotationally and translationally integral with the first (11) and with the second electrospindle (45), supported above said working plane (2) in parallel to the first electrospindle (11) and at a side opposite to said second electrospindle (45) by a respective supporting element (48) associated to the supporting equipment (12) of the first electrospindle (11).

3. Machine (1) according to claim 2, further comprising:
- a third actuator device (55) configured to move said third electrospindle (46) towards and away from said first electrospindle (11) in parallel to said working plane (2) and along a direction substantially perpendicular to a cutting plane extending perpendicularly to the working plane (2); and
- a fourth actuator device (63) configured to move said third electrospindle (46) along a direction perpendicular to the working plane (2) independently of the first (11) and optionally of the second electrospindle (45);
said third (55) and fourth (63) actuator devices being supported by said supporting element (48) of said third electrospindle (46).

4. Machine (1) according to claim 1 or 2, wherein the supporting element (75) of the second (45) and/or of the third tool-holder electrospindle (46) is configured to support the second (45) and/or the third electrospindle (46) at an offset position along a direction substantially parallel to said cutting plane extending perpendicularly to the working plane (2).

5. Machine (1) according to claim 2 and 4, wherein the supporting element (75) of the second (45) and/or of the third tool-holder electrospindle (46) is configured to support the second (45) and the third electrospindle (46) at positions forming a substantially triangle-shaped configuration of the electrospindles (11, 45, 46) of the machine (1).

6. Machine (1) according to any one of the preceding claims, wherein the supporting element (47, 48, 75) of the second and/or of the third electrospindle (46) is laterally extending in a cantilevered fashion from the supporting equipment (12) of the first tool-holder electrospindle (11).

7. Machine (1) according to claim 1 or 3, wherein said first actuator device and/or said third actuator device (55) configured to move said at least a second (45) and/or said third electrospindle (46) towards and away from the first electrospindle (11) comprises a linear actuator.

8. Machine (1) according to any one of the preceding claims, wherein the first electrospindle (11) is rotatably mounted on a supporting body (33) associated to an end of the supporting equipment (12) of the first electrospindle (11) proximal to the working plane (2).

9. Machine (1) according to claim 1, wherein the supporting element (47, 48, 75) of the second and/or of the third tool-holder electrospindle (46) is laterally extending in a cantilevered fashion from a supporting body (33) of the first electrospindle (11).

10. Machine (1) according to claim 1, wherein the supporting equipment (12) of the first electrospindle (11) perpendicularly movable with respect to the working plane (2) comprises a braking device (66) configured to prevent relative rotation movements between a part of the supporting equipment (12) not rotatable about a direction (Z) perpendicular to the working plane and a part of said equipment (12) rotatable about said direction (Z) and associated to the first electrospindle (11).

11. Machine (1) according to any one of the preceding claims, comprising a manipulator group (39) of a slab material (3) to be machined or machined rotationally and translationally integral with said first electrospindle (11).

12. Machine (1) according to claim 11, wherein said manipulator group (39) is positioned in parallel to a cutting plane extending perpendicularly to the working plane (2) and frontally with respect to said first electrospindle (11).

13. Machine (1) according to claim 11 or 12, wherein said manipulator group (39) is associated to or incorporated in a protective casing (38) of a cutting disc (35) driven by said first electrospindle (11).

14. Machine (1) according to claims 8 and 11, wherein the first electrospindle (11) is rotatable between an operative position, wherein a cutting disc (35) driven by said first electrospindle (11) can interact with a slab (3) being machined and the manipulator group (39) is in a respective first non-operative position distal with respect to the working plane (2), and a second non-operative position, wherein the cutting disc (35) cannot interact with the slab (3) and the manipulator group (39) is in a second operative position proximal with respect to the working plane (2).

15. Machine (1) according to any one of claims 11-14, wherein said manipulator group (39) comprises gripping means (40) of the suction type.

## Patentansprüche

1. Maschine (1) zur Bearbeitung von Plattenmaterialien, umfassend:
- eine Arbeitsfläche (2), die ausgebildet ist, um ein zu bearbeitendes Plattenmaterial (3) zu tragen;
- eine erste Werkzeughalter-Elektrospindel (11), die oberhalb der Arbeitsfläche (2) von einer entsprechenden Trägereinrichtung (12) getragen wird, welche ausgebildet ist, um die erste Elektrospindel (11) um eine Drehachse (Z) senkrecht zur Arbeitsfläche (2) zu bewegen;
- einen Bewegungsapparat (14), der ausgebildet ist, um die erste Elektrospindel (11) und die jeweilige Trägereinrichtung (12) parallel zur Arbeitsfläche (2) und entlang von Richtungen (X, Y) senkrecht zueinander zu bewegen;
- mindestens eine zweite Werkzeughalter-Elektrospindel (45), die drehfest und translatorisch mit der ersten Elektrospindel (11) integral ist und oberhalb der Arbeitsfläche (2) parallel zur ersten Elektrospindel (11) von einem entsprechenden Trägerelement (47) getragen wird, das der Trägereinrichtung (12) der ersten Elektrospindel (11) zugeordnet ist;
- eine erste Betätigungsvorrichtung (55), die ausgebildet ist, um die mindestens eine zweite Elektrospindel (45) in Richtung der ersten Elektrospindel (11) und weg von dieser parallel zur Arbeitsfläche (2) und entlang einer Richtung im Wesentlichen senkrecht zu einer Schnittebene zu bewegen, die sich senkrecht zu der Arbeitsfläche (2) erstreckt; und
- eine zweite Betätigungsvorrichtung (63), die ausgebildet ist, um die mindestens eine zweite Elektrospindel (45) in Bezug auf die Arbeitsfläche (2) unabhängig von der ersten Elektrospindel (11) zu bewegen;
wobei die erste (55) und zweite (63) Betätigungsvorrichtung durch das Trägerelement (47) der mindestens einen zweiten Elektrospindel (45) getragen werden, **dadurch gekennzeichnet, dass** die Trägereinrichtung (12) der ersten Elektrospindel (11) senkrecht zur Arbeitsfläche (2) beweglich ist und dass die zweite Betätigungsvorrichtung (63) ausgebildet ist, um die mindestens eine zweite Elektrospindel (45) unabhängig von der ersten Elektrospindel (11) entlang einer Richtung senkrecht zur Arbeitsfläche (2) zu bewegen.

2. Maschine (1) nach Anspruch 1, ferner umfassend eine dritte Werkzeughalter-Elektrospindel (46), die drehfest und translatorisch mit der ersten (11) und mit der zweiten Elektrospindel (45) integral ist und oberhalb der Arbeitsfläche (2) parallel zur ersten Elektrospindel (11) und auf einer der zweiten Elektrospindel (45) gegenüberliegenden Seite durch ein entsprechendes Trägerelement (48), das der Trägereinrichtung (12) der ersten Elektrospindel (11) zugeordnet ist, getragen wird.

3. Maschine (1) nach Anspruch 2, ferner umfassend:
- eine dritte Betätigungsvorrichtung (55), die ausgebildet ist, um die dritte Elektrospindel (46) in Richtung der ersten Elektrospindel (11) und weg von dieser parallel zur Arbeitsfläche (2) und entlang einer Richtung im Wesentlichen senkrecht zu einer Schnittebene zu bewegen, die sich senkrecht zu der Arbeitsfläche (2) erstreckt; und
- eine vierte Betätigungsvorrichtung (63), die ausgebildet ist, um die dritte Elektrospindel (46) entlang einer Richtung senkrecht zur Arbeitsfläche (2) unabhängig von der ersten (11) und gegebenenfalls der zweiten Elektrospindel (45) zu bewegen;
wobei die dritte (55) und vierte (63) Betätigungsvorrichtung von dem Trägerelement (48) der dritten Elektrospindel (46) getragen werden.

4. Maschine (1) nach Anspruch 1 oder 2, wobei das Trägerelement (75) der zweiten (45) und/oder der dritten Werkzeughalter-Elektrospindel (46) ausgebildet ist, um die zweite (45) und/oder die dritte Elektrospindel (46) in einer versetzten Position entlang einer Richtung im Wesentlichen parallel zu der Schnittebene zu halten, die sich senkrecht zu der Arbeitsfläche (2) erstreckt.

5. Maschine (1) nach Anspruch 2 und 4, wobei das Trägerelement (75) der zweiten (45) und/oder der dritten Werkzeughalter-Elektrospindel (46) ausgebildet ist, um die zweite (45) und die dritte Elektrospindel (46) an Positionen zu tragen, die eine im Wesentlichen dreieckförmige Anordnung der Elektrospindel (11, 45, 46) der Maschine (1) bilden.

6. Maschine (1) nach einem der vorstehenden Ansprüche, wobei sich das Trägerelement (47, 48, 75) der zweiten und/oder der dritten Elektrospindel (46) seitlich freitragend von der Trägereinrichtung (12) der ersten Werkzeughalter-Elektrospindel (11) erstreckt.

7. Maschine (1) nach Anspruch 1 oder 3, wobei die erste Betätigungsvorrichtung und/oder die dritte Betätigungsvorrichtung (55), die ausgebildet ist, um die mindestens eine zweite (45) und/oder dritte Elektrospindel (46) in Richtung der ersten Elektrospindel (11) und von dieser weg zu bewegen, einen Linearantrieb umfasst.

8. Maschine (1) nach einem der vorstehenden Ansprüche, wobei die erste Elektrospindel (11) drehbar auf einem Trägerkörper (33) montiert ist, der einem Ende der Trägereinrichtung (12) der ersten Elektrospindel (11) proximal zur Arbeitsfläche (2) zugeordnet ist.

9. Maschine (1) nach Anspruch 1, wobei sich das Trägerelement (47, 48, 75) der zweiten und/oder der dritten Werkzeughalter-Elektrospindel (46) seitlich freitragend von einem Trägerkörper (33) der ersten Elektrospindel (11) erstreckt.

10. Maschine (1) nach Anspruch 1, wobei die senkrecht zur Arbeitsfläche (2) bewegliche Trägereinrichtung (12) der ersten Elektrospindel (11) eine Bremsvorrichtung (66) umfasst, die ausgebildet ist, um relative Drehbewegungen zwischen einem Teil der Trägereinrichtung (12), der nicht um eine Richtung (Z) senkrecht zur Arbeitsfläche drehbar ist, und einem Teil der Einrichtung (12), der um die Richtung (Z) drehbar und der ersten Elektrospindel (11) zugeordnet ist, zu verhindern.

11. Maschine (1) nach einem der vorstehenden Ansprüche, umfassend eine Manipulatorgruppe (39) aus einem Plattenmaterial (3), das drehfest und translatorisch integral mit der ersten Elektrospindel (11) bearbeitet wird oder bearbeitet werden soll.

12. Maschine (1) nach Anspruch 11, wobei die Manipulatorgruppe (39) parallel zu einer Schnittebene angeordnet ist, die sich senkrecht zu der Arbeitsfläche (2) und frontal zu der ersten Elektrospindel (11) erstreckt.

13. Maschine (1) nach Anspruch 11 oder 12, wobei die Manipulatorgruppe (39) einem Schutzgehäuse (38) einer von der ersten Elektrospindel (11) angetriebenen Trennscheibe (35) zugeordnet oder in dieses eingebaut ist.

14. Maschine (1) nach den Ansprüchen 8 und 11, wobei die erste Elektrospindel (11) zwischen einer Betriebsposition drehbar ist, wobei eine von der ersten Elektrospindel (11) angetriebene Trennscheibe (35) mit einer zu bearbeitenden Platte (3) zusammenwirken kann und sich die Manipulatorgruppe (39) in einer jeweiligen ersten Nichtbetriebsposition distal zur Arbeitsfläche (2) befindet, und eine zweite Nichtbetriebsposition, wobei die Trennscheibe (35) nicht mit der Platte (3) zusammenwirken kann und die Manipulatorgruppe (39) sich in einer zweiten Betriebsposition proximal zur Arbeitsfläche (2) befindet.

15. Maschine (1) nach einem der Ansprüche 11-14, wobei die Manipulatorgruppe (39) Greifmittel (40) vom Saugtyp umfasst.

## Revendications

1. Machine (1) pour usiner des matériaux en brames, comprenant :
- un plan de travail (2) conçu pour supporter un matériau en brames (3) à usiner ;
- une première électrobroche (11) de support d'outil soutenue au-dessus dudit plan de travail (2) par un équipement de support (12) respectif, conçu pour déplacer ladite première électrobroche (11) autour d'un axe de rotation (Z) perpendiculaire au plan de travail (2) ;
- un appareil mobile (14) conçu pour déplacer la première électrobroche (11) et l'équipement de support respectif (12) en parallèle au plan de travail (2) et le long de directions (X, Y) perpendiculaires l'une à l'autre ;
- au moins une deuxième électrobroche (45) de support d'outil solidaire en rotation et en translation à la première électrobroche (11), soutenue au-dessus dudit plan de travail (2) en parallèle à la première électrobroche (11) par un élément de support respectif (47) associé à l'équipement de support (12) de la première électrobroche (11) ;
- un premier dispositif actionneur (55) conçu pour déplacer ladite au moins une deuxième électrobroche (45) en direction et à distance de ladite première électrobroche (11) en parallèle audit plan de travail (2) et le long d'une direction sensiblement perpendiculaire à un plan de coupe s'étendant perpendiculairement au plan de travail (2) ; et
- un deuxième dispositif actionneur (63) conçu pour déplacer ladite au moins une deuxième électrobroche (45) par rapport au plan de travail (2) indépendamment de la première électrobroche (11) ;
lesdits premier (55) et deuxième (63) dispositifs actionneurs étant supportés par ledit élément de support (47) de ladite au moins une deuxième électrobroche (45), **caractérisée en ce que** ledit équipement de support (12) de la première électrobroche (11) est mobile perpendiculairement par rapport au plan de travail (2) et **en ce que** ledit deuxième dispositif actionneur (63) est conçu pour déplacer ladite au moins une deuxième électrobroche (45) indépendamment de la première électrobroche (11) le long d'une direction perpendiculaire au plan de travail (2).

2. Machine (1) selon la revendication 1, comprenant en outre une troisième électrobroche (46) de support d'outil, solidaire en rotation et en translation avec la première (11) et la deuxième (45) électrobroches, soutenue au-dessus dudit plan de travail (2) en parallèle à la première électrobroche (11) et sur un côté opposé à ladite deuxième électrobroche (45) par un élément de support respectif (48) associé à l'équipement de support (12) de la première électrobroche (11).

3. Machine (1) selon la revendication 2, comprenant en outre :
- un troisième dispositif actionneur (55) conçu pour déplacer ladite troisième électrobroche (46) en direction et à distance de ladite première électrobroche (11) en parallèle audit plan de travail (2) et le long d'une direction sensiblement perpendiculaire à un plan de coupe s'étendant perpendiculairement au plan de travail (2) ; et
- un quatrième dispositif actionneur (63) conçu pour déplacer ladite troisième électrobroche (46) le long d'une direction perpendiculaire au plan de travail (2) indépendamment de la première (11) et facultativement de la deuxième (45) électrobroches ;
lesdits troisième (55) et quatrième (63) dispositifs actionneurs étant soutenus par ledit élément de support (48) de ladite troisième électrobroche (46).

4. Machine (1) selon la revendication 1 ou 2, dans laquelle l'élément de support (75) de la deuxième (45) et/ou de la troisième (46) électrobroche de support d'outil est conçu pour soutenir la deuxième (45) et/ou la troisième (46) électrobroche à une position décalée le long d'une direction sensiblement parallèle audit plan de coupe s'étendant perpendiculairement au plan de travail (2).

5. Machine (1) selon les revendications 2 et 4, dans laquelle l'élément de support (75) de la deuxième (45) et/ou de la troisième (46) électrobroche de support d'outil est conçu pour soutenir la deuxième (45) et la troisième (46) électrobroche à des positions formant une configuration sensiblement en forme de triangle des électrobroches (11, 45, 46) de la machine (1).

6. Machine (1) selon l'une quelconque des revendications précédentes, dans laquelle l'élément de support (47, 48, 75) de la deuxième et/ou de la troisième (46) électrobroche s'étend latéralement en porte-à-faux à partir de l'équipement de support (12) de la première électrobroche (11) de support d'outil.

7. Machine (1) selon la revendication 1 ou 3, dans laquelle ledit premier dispositif actionneur et/ou ledit troisième dispositif actionneur (55) conçus pour déplacer ladite au moins une deuxième (45) et/ou ladite troisième (46) électrobroches en direction et à distance de la première électrobroche (11) comprennent un actionneur linéaire.

8. Machine (1) selon l'une quelconque des revendications précédentes, dans laquelle la première électrobroche (11) est montée en rotation sur un corps de support (33) associé à une extrémité de l'équipement de support (12) de la première électrobroche (11) proximale par rapport au plan de travail (2).

9. Machine (1) selon la revendication 1, dans laquelle l'élément de support (47, 48, 75) de la deuxième et/ou de la troisième (46) électrobroche de support d'outil s'étend latéralement en porte-à-faux à partir d'un corps de support (33) de la première électrobroche (11).

10. Machine (1) selon la revendication 1, dans laquelle l'équipement de support (12) de la première électrobroche (11) mobile perpendiculairement par rapport au plan de travail (2) comprend un dispositif de freinage (66) conçu pour empêcher les mouvements de rotation relative entre une partie de l'équipement de support (12) non rotative autour d'une direction (Z) perpendiculaire au plan de travail et une partie dudit équipement de support (12) rotative autour de ladite direction (Z) et associée à la première électrobroche (11).

11. Machine (1) selon l'une quelconque des revendications précédentes, comprenant un groupe de manipulation (39) d'un matériau en brames (3) à usiner ou usiné solidaire en rotation et en translation à ladite première électrobroche (11).

12. Machine (1) selon la revendication 11, dans laquelle ledit groupe de manipulation (39) est positionné en parallèle à un plan de coupe s'étendant perpendiculairement au plan de travail (2) et frontalement par rapport à ladite première électrobroche (11).

13. Machine (1) selon la revendication 11 ou 12, dans laquelle ledit groupe de manipulation (39) est associé à ou intégré dans un boîtier de protection (38) d'un disque de coupe (35) entraîné par ladite première électrobroche (11).

14. Machine (1) selon les revendications 8 et 11, dans laquelle la première électrobroche (11) est rotative entre une position de fonctionnement, dans laquelle un disque de coupe (35) entraîné par ladite première électrobroche (11) peut interagir avec une brame (3) en cours d'usinage et le groupe de manipulation (39) est dans une première position respective de non-fonctionnement distale par rapport au plan de travail (2), et une seconde position de non-fonctionnement, dans laquelle le disque de coupe (35) ne peut pas interagir avec la brame (3) et le groupe de manipulation (39) est dans une seconde position de fonctionnement proximale par rapport au plan de travail (2).

15. Machine (1) selon l'une quelconque des revendications 11 à 14, dans laquelle ledit groupe de manipulation (39) comprend des moyens de saisie (40) de type aspiration.
